(19) Europäisches Patentamt
European Patent Office
Office européen des brevets

(11) EP 4 645 571 A1

(12) **EUROPEAN PATENT APPLICATION**
published in accordance with Art. 153(4) EPC

(43) Date of publication:
**05.11.2025 Bulletin 2025/45**

(21) Application number: **23933353.7**

(22) Date of filing: **17.04.2023**

(51) International Patent Classification (IPC):
***H01M 50/489*** *(2021.01)* ***H01M 50/411*** *(2021.01)*

(52) Cooperative Patent Classification (CPC):
Y02E 60/10

(86) International application number:
**PCT/CN2023/088802**

(87) International publication number:
**WO 2024/216473 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
- **JIN, Haizu**
  **Ningde, Fujian 352100 (CN)**
- **PENG, Lin**
  **Ningde, Fujian 352100 (CN)**
- **PENG, Shuangjuan**
  **Ningde, Fujian 352100 (CN)**
- **LI, Baiqing**
  **Ningde, Fujian 352100 (CN)**
- **ZHAO, Fenggang**
  **Ningde, Fujian 352100 (CN)**

(74) Representative: **Gong, Jinping**
**CocreateIP**
**Neumarkter Straße 21**
**81673 München (DE)**

(54) **SEPARATOR, BATTERY CELL, BATTERY, AND ELECTRIC DEVICE**

(57) The present application provides a separator, a battery cell, a battery and an electrical apparatus. The separator comprises a polymer group, wherein the polymer group comprises at least one of a first polymer and a second polymer, wherein the separator satisfies:

$$1.5 \le \left[\frac{m_2-M}{m_1-M}\right] \times \frac{v}{\lambda} \le 12.$$

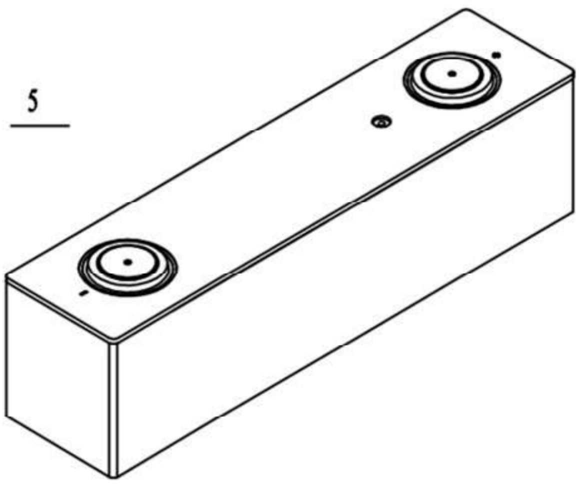


**FIG. 1**

EP 4 645 571 A1

## Description

### TECHNICAL FIELD

The present application relates to the technical field of batteries, and in particular, to a separator, a battery cell, a battery, and an electrical apparatus.

### BACKGROUND

Because of the characteristics of a high capacity, a long service life and the like, battery cells are widely used in electronic devices, such as mobile phones, laptops, electromobiles, electric cars, electric airplanes, electric ships, electric toy cars, electric toy ships, electric toy airplanes, and electric tools.

As the application range of batteries becomes more and more extensive, the requirements on the performances of the battery cells are becoming increasingly stringent. However, the current cycle performance of battery cells is poor and still needs to be further improved.

### SUMMARY OF THE INVENTION

Embodiments of the present application are conducted in view of the above problems, and aim to provide a separator, a battery cell, a battery, and an electrical apparatus.

A first aspect of the present application provides a separator, including a polymer group, wherein the polymer group includes at least one of a first polymer and a second polymer;
wherein the separator satisfies:

$$1.5 \leq \left[\frac{m_2 - M}{m_1 - M}\right] \times \frac{v}{\lambda} \leq 12;$$

M represents mass of the separator that does not absorb an electrolyte solution, and a unit thereof is g;
$m_1$ represents mass of the separator weighed under an ambient pressure after same is soaked in the electrolyte solution for 2 h, and a unit thereof is g;
$m_2$ represents mass of the separator weighed under a pressure of 10,000 N in the ambient pressure after same is soaked in the electrolyte solution for 2 h, and a unit thereof is g;
v represents a liquid absorption rate of the separator, and a unit thereof is mg/s; and
$\lambda$ represents porosity of the separator.

Therefore, the separator of the embodiments of the present application includes the polymer group, and the polymer included in the polymer group has high liquid absorption and high liquid retention capabilities. On the one hand, the separator has a strong liquid retention capability, and the electrolyte solution is not prone to be squeezed out during the cyclic charge and discharge process of the battery cell. On the other hand, the separator has a strong liquid absorption capability and a high liquid absorption rate. Even if a small amount of electrolyte solution is squeezed out, it can be quickly absorbed back during the discharge process of the battery cell, and a transmission rate of the electrolyte solution between the separator and an electrode plate is accelerated, thereby reducing liquid shortage during the cyclic charge and discharge process, reducing battery polarization, and improving the cycle performance of the battery cell.

In some embodiments, the separator satisfies:

$$3.0 \leq \left[\frac{m_2 - M}{m_1 - M}\right] \times \frac{v}{\lambda} \leq 6.0.$$

Therefore, when the separator of the embodiments of the present application satisfies the above conditions, its liquid absorption and liquid retention capabilities can be further improved, which can further reduce the liquid shortage during the cyclic charge and discharge process, reduce battery polarization, and improve the cycle performance of the battery cell.

In some embodiments, the separator satisfies:
$\frac{m_2 - M}{m_1 - M} > 25\%$ ; and optionally, $\frac{m_2 - M}{m_1 - M} \geq 30\%$. ·

Therefore, when the separator of the embodiments of the present application satisfies the above conditions, its liquid absorption and liquid retention capabilities can be further improved, which can further reduce the liquid shortage during the cyclic charge and discharge process, reduce battery polarization, and improve the cycle performance of the

battery cell.

In some embodiments, the separator satisfies:

$$88\% \leq \frac{m_1-M}{M} \times 100\% \leq 300\%.$$

Therefore, when the separator of the embodiments of the present application satisfies the above conditions, its liquid absorption and liquid retention capabilities can be further improved, which can further reduce the liquid shortage during the cyclic charge and discharge process, reduce battery polarization, and improve the cycle performance of the battery cell.

In some embodiments, the separator satisfies:

$$22.5\% \leq \frac{m_2-M}{M} \times 100\% \leq 300\%.$$

Therefore, when the separator of the embodiments of the present application satisfies the above conditions, its liquid absorption and liquid retention capabilities can be further improved, which can further reduce the liquid shortage during the cyclic charge and discharge process, reduce battery polarization, and improve the cycle performance of the battery cell.

In some embodiments, the separator satisfies:

$v/\lambda>5.00$; and optionally, $5<v/\lambda<50$.

Therefore, when the separator of the embodiments of the present application satisfies the above conditions, the liquid absorption capability of the separator is relatively good, which is beneficial to improving the absorption rate of the electrolyte solution, thereby further improving the cycle performance of the battery cell.

In some embodiments, the polymer group has a mass percentage of 0.1% to 20% based on total mass of the separator. When the mass percentage of the polymer group is within the above range, the separator has relatively good liquid absorption and liquid retention capabilities, which is beneficial to further improving the cycle performance of the battery cell.

In some embodiments, the first polymer and the second polymer each independently include a fluoropolymer.

Optionally, crystallinity of the fluoropolymer measured by differential scanning calorimetry is $Xc_1$, $0<Xc_1\leq30\%$. A melting temperature of the fluoropolymer is $T_{m1}$, a unit thereof is °C, and $0<T_{m1}\leq140$.

In some embodiments, the fluoropolymer has a glass transition temperature of $Tg_1$, a unit thereof is °C., and $-150\leq T_{g1}\leq60$.

In some embodiments, the fluoropolymer includes at least one of a building block represented by formula (AI) to a building block represented by formula (AIII),

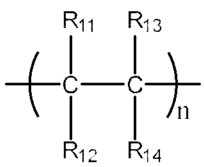 formula (AI) and 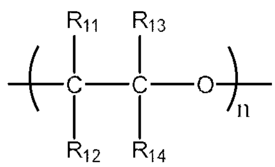 formula (AII).

In formula (AI) and formula (AII), $R_{11}$, $R_{12}$, $R_{13}$ and $R_{14}$ each independently include a hydrogen atom, a fluorine atom, a bromine atom, a substituted or unsubstituted C1-C3 alkyl group or a substituted or unsubstituted C1-C3 alkoxy group, and at least one of $R_{11}$, $R_{12}$, $R_{13}$ and $R_{14}$ includes a fluorine atom;

In formula (AIII),

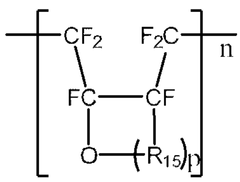 formula (AIII).

$R_{15}$ includes a single bond, a substituted or unsubstituted C1-C3 alkyl group; p is selected from positive integers from 1 to 3; and n is selected from positive integers from 1,000 to 30,000.

In some embodiments, the liquid-retaining polymer further includes an ether polymer, wherein the ether polymer is made into a sheet structural body; the sheet structural body is subjected to a dynamic frequency scanning test at ($T_{m2}$ +20)°C to obtain an elasticity modulus G'-loss modulus G" curve, a slope of the elasticity modulus G'-loss modulus G" curve is $K_1$, $1<K_1<\infty$, $T_{m2}$°C represents a melting temperature of the ether polymer; optionally, $1<K_1\leq 100$; and further optionally, $1<K_1\leq 10$.

In some embodiments, the first polymer and the second polymer each independently include the ether polymer.

Optionally, the ether polymer includes a building block represented by formula (BI) and/or a building block represented by formula (BII),

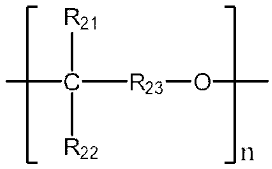

formula (BI).

In formula (BI), $R_{21}$ and $R_{22}$ each independently include a hydrogen atom, a substituted or unsubstituted C1-C3 alkyl group, or a substituted or unsubstituted C1-C3 alkoxy group; and $R_{23}$ includes a substituted or unsubstituted C1-C5 alkylene group;

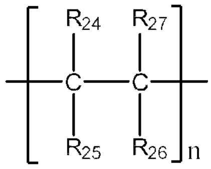

formula (BII).

In formula (BII), $R_{24}$ to $R_{27}$ each independently include a hydrogen atom, a substituted or unsubstituted C1-C3 alkyl group, a substituted or unsubstituted C1-C3 alkoxy group or an ether group, and at least one of $R_{24}$ to $R_{27}$ includes a substituted or unsubstituted C1-C3 alkoxy group or an ether group.

In some embodiments, the first polymer and the second polymer each independently include an ester polymer.

Optionally, the ester polymer is made into a sheet structural body; the sheet structural body is subjected to a dynamic frequency scanning test at ($T_{m3}$+20)°C to obtain an elasticity modulus G'-loss modulus G" curve, a slope of the elasticity modulus G'-loss modulus G" curve is $K_2$, $1<K_2<\infty$, $T_{m3}$°C represents a melting temperature of the ester polymer; optionally, $1<K_2\leq 100$; and further optionally, $1<K_2\leq 10$.

In some embodiments, the ester polymer includes a building block represented by formula (CI) and/or a building block represented by formula (CII),

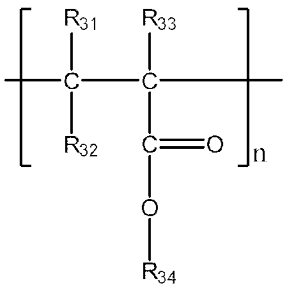

formula (CI).

In formula (CI), $R_{31}$, $R_{32}$ and $R_{33}$ each independently include a hydrogen atom, a substituted or unsubstituted C1-C8 alkyl group; and $R_{34}$ includes a substituted or unsubstituted C1-C8 alkyl group, or a substituted or unsubstituted C1-C8 hydroxyalkyl group,

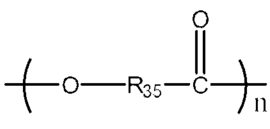

formula (CII).

In formula (CII), $R_{35}$ includes a substituted or unsubstituted C2-C6 methylene group; and optionally, $R_{35}$ each independently includes a substituted or unsubstituted C2-C4 methylene group.

In some embodiments, the first polymer and the second polymer each independently include an aldehyde-ketone polymer.

Optionally, the aldehyde-ketone polymer is made into a sheet structural body; the sheet structural body is subjected to a dynamic frequency scanning test at $(T_{m4}+20)$°C to obtain an elasticity modulus G'-loss modulus G" curve, a slope of the elasticity modulus G'-loss modulus G" curve is $K_3$, $0.8 \le K_3 < \infty$, $T_{m4}$°C represents a melting temperature of the aldehyde-ketone polymer; optionally, $0.8 \le K_3 \le 100$; and further optionally, $0.8 \le K_3 \le 10$.

In some embodiments, the aldehyde-ketone polymer includes a building block represented by formula (DI) and/or a building block represented by formula (DII),

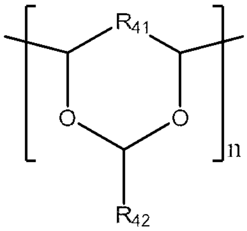

formula (DI).

In formula (DI), $R_{41}$ includes a single bond, and a substituted or unsubstituted C1-C6 methylene group; and $R_{42}$ includes a hydrogen atom, and a substituted or unsubstituted C1-C6 alkyl group;

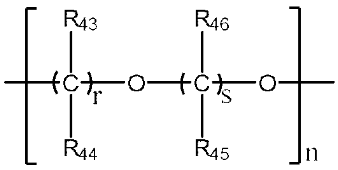

formula (DII).

In formula (DII), $R_{43}$ to $R_{46}$ each independently include a hydrogen atom, a hydroxyl group, a substituted or unsubstituted C1-C3 alkyl group, a substituted or unsubstituted C1-C3 hydroxyalkyl group, or a substituted or unsubstituted C1-C3 alkoxy group; and r and s are each independently selected from integers in a range of 0 to 5, and at least one of r and s is selected from a positive integer.

In some embodiments, the liquid-retaining polymer has a molecular weight of $1.2 \times 10^5$ g/mol to $1.0 \times 10^6$ g/mol.

In some embodiments, a separation body includes a substrate, and a polymer layer is disposed on at least one surface of the substrate.

In some embodiments, the separator includes a porous substrate, and the polymer group is distributed in pores of the porous substrate.

In some embodiments, the separator includes a porous substrate, and a polymer layer disposed on at least one surface of the porous substrate. The polymer layer includes the polymer group.

In some embodiments, a coating weight of the polymer group is 0.5 mg/1540.25 $mm^2$ to 5 mg/1540.25 $mm^2$.

In a second aspect, the present application provides a battery cell, including the separator according to any embodiment of the first aspect of the present application.

In a third aspect, the present application provides an battery, including the battery cell according to any embodiment of the second aspect of the present application.

In a fourth aspect, the present application provides an electrical apparatus, including the battery according to any embodiment of the third aspect of the present application.

## BRIEF DESCRIPTION OF DRAWINGS

In order to explain technical solutions of the examples of the present application more clearly, a brief introduction of drawings to be used in the examples of the present application will be made below. Apparently, the drawings described below are merely some examples of the present application, and other drawings can be obtained according to these drawings by those ordinarily skilled in the art without creative efforts.

FIG. 1 is a schematic view of an embodiment of a battery cell of the present application;
FIG. 2 is a schematic exploded view of the embodiment of the battery cell in FIG. 1;

FIG. 3 is a schematic view of an embodiment of a battery module of the present application;
FIG. 4 is a schematic view of an embodiment of a battery pack of the present application;
FIG. 5 is a schematic exploded view of the embodiment of the battery pack as shown in FIG. 4;
FIG. 6 is a schematic view of an embodiment of an electrical apparatus including a battery cell of the present application as a power source;

The accompanying drawings are not drawn according to the actual scale.

Description of reference numerals:

1, Battery pack; 2, Upper box body; 3, Lower box body; 4, Battery module;
5, Battery cell; 51, Housing; 52, Electrode assembly;
53, Cover plate;
6, Electrical apparatus.

## DETAILED DESCRIPTION

Hereinafter, embodiments specifically disclosing a separator, a battery cell, a battery, and an electrical apparatus of the present application are described in detail. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions. Unless otherwise specified, all technical features and optional technical features of the present application may be combined with each other to form new technical solutions.

If not specifically stated, all steps of the present application may be performed sequentially or randomly, preferably sequentially. For example, a method includes steps (a) and (b), meaning that the method may include steps (a) and (b) performed sequentially, or may include steps (b) and (a) performed sequentially. For example, the reference to the fact that the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, "including" and "containing" mentioned in the present application may be openended, or may be closed-ended. For example, "including" and "containing" may indicate that it is possible to include or contain other components not listed, and it is also possible to include or contain only the listed components.

If not specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

In the present application, the terms "a plurality of" and "multiple" refer to two or more.

The term "alkyl" encompasses both straight and branched chain alkyl groups. For example, the alkyl group may be a C1-C5 alkyl group, a C1-C4 alkyl group, a C1-C3 alkyl group, or a C1-C2 alkyl group. In some examples, the alkyl group includes methyl, ethyl, propyl, isopropyl, butyl, isobutyl, and the like. Additionally, the alkyl group may be optionally

substituted. When substituted, a substituent includes a fluorine atom.

The term "alkoxy" refers to a group in which an alkyl group is connected to an oxygen atom via a single bond. For example, the alkoxy group may be a $C_1$ to $C_5$ alkoxy group, a $C_1$ to $C_3$ alkoxy group, or a $C_1$ to $C_2$ alkoxy group. In some examples, the alkoxy group may include methoxy, ethoxy, and propoxy. Additionally, the alkoxy group may be optionally substituted.

The term "halogen atom" refers to a fluorine atom, a chlorine atom, a bromine atom or the like.

The term "hydrogen" refers to 1H (protium, H), 2H (deuterium, D) or 3H (tritium, T). In various examples, "hydrogen" may be 1H (protium, H).

The battery cell includes a positive electrode plate, a negative electrode sheet, the separator, and an electrolyte solution. The separator is located between the positive electrode plate and the negative electrode plate to isolate the positive electrode plate and the negative electrode plate. During a charge and discharge cycle process of the battery cell, the electrode assembly expands in volume, especially in a later stage of the battery cell cycle when an expansion force is high, causing the electrolyte solution to be squeezed out. The separator has a low liquid absorption rate, making it difficult to absorb the electrolyte solution back. The risk of liquid shortage and bridge breakage in the electrode plates is high, which may deteriorate the cycle performance of the battery cell and shorten the cycle life of the battery cell.

In view of the above problems, an embodiment of the present application proposes a separator. The separator includes a polymer group, and a polymer included in the polymer group has high liquid absorption and high liquid retention capabilities. On the one hand, the separator has a strong liquid retention capability, and the electrolyte solution is not prone to be squeezed out during the cyclic charge and discharge process of the battery cell. On the other hand, the separator has a strong liquid absorption capability and a high liquid absorption rate. Even if a small amount of electrolyte solution is squeezed out, it can be quickly absorbed back during the discharge process of the battery cell, and a transmission rate of the electrolyte solution between the separator and an electrode plate is accelerated, thereby reducing liquid shortage during the cyclic charge and discharge process, reducing battery polarization, and improving the cycle performance of the battery cell.

## Separator

In a first aspect, an embodiment of the present application provides a separator. The separator includes a polymer group. The polymer group includes at least one of a first polymer and a second polymer. The separator satisfies:

$$1.5 \leq \left[\frac{m_2-M}{m_1-M}\right] \times \frac{v}{\lambda} \leq 12;$$

M represents, and a unit thereof is g;

$m_1$ represents mass of the separator weighed under an ambient pressure after same is soaked in the electrolyte solution for 2 h, and a unit thereof is g;

represents mass of the separator weighed under an acting force of 10,000 N applied in the ambient pressure after same is soaked in the electrolyte solution for 2 h, and a unit thereof is g;

v represents a liquid absorption rate of the separator, and a unit thereof is mg/s; and

$\lambda$ represents porosity of the separator.

When the above formula is used for specific calculations, only the specific values are taken into account without taking into account the units of the parameters.

The separator of the embodiment of the present application includes the polymer group, and the polymer included in the polymer group has high liquid absorption and high liquid retention capabilities. On the one hand, the separator has a strong liquid retention capability, and the electrolyte solution is not prone to be squeezed out during the cyclic charge and discharge process of the battery cell. On the other hand, the separator has a strong liquid absorption capability and a high liquid absorption rate. Even if a small amount of electrolyte solution is squeezed out, it can be quickly absorbed back during the discharge process of the battery cell, and a transmission rate of the electrolyte solution between the separator and an electrode plate is accelerated, thereby reducing liquid shortage during the cyclic charge and discharge process, reducing battery polarization, and improving the cycle performance of the battery cell.

The separator can be made of a substrate, the polymer group, etc. Or, the separator is derived from the battery cell. The battery cell is disassembled, and the separator soaked in the electrolyte solution in the battery cell is taken out. The separator is washed with deionized water and then placed under vacuum drying at 80°C for 12 hours to obtain the separator, which is used for separator tests such as mass weighing, liquid absorption rate, and porosity.

M represents mass of the separator that does not absorb the electrolyte solution, which can also be understood as the mass of the separator itself. Specifically, the separator can be cut into 10 discs of 1540.25 $mm^2$ and their mass can

be weighed on an electronic balance.

$m_1$ represents mass of the separator weighed under an ambient pressure after same is soaked in the electrolyte solution for 2 h. Specifically, the separator can be cut into 10 discs of 1540.25 $mm^2$. After the discs are soaked in the electrolyte solution for 2 h, the discs are taken out and suspended in the ambient pressure for 2 min to weigh their mass then.

$m_2$ represents the mass of the separator weighed under the acting force of 10,000 N applied in the ambient pressure after same is soaked in the electrolyte solution for 2 h. Specifically, the separator can be cut into 10 discs of 1540.25 $mm^2$. After the discs are soaked in the electrolyte solution for 2 h, the discs are taken out, and stacked in sequence, and the mass of the separator is weighed after the acting force of 10,000 N is applied under the ambient pressure.

The present application uses a standard electrolyte solution as a test sample for testing. A specific formula of the electrolyte solution can refer to a formula of the electrolyte solution in the example. For example, the electrolyte solution includes ethylene carbonate (EC), ethyl methyl carbonate (EMC), and dimethyl carbonate (DMC) in a volume ratio of 1:1:1, and the electrolyte solution also includes lithium hexafluorophosphate ($LiPF_6$) with a molar concentration of 1 mol/L.

In the embodiment of the present application, v represents the liquid absorption rate of the separator, which can be detected by the following method, and the specific steps are as follows.

A pipette is used to absorb 1 mL of electrolyte solution.

The separator is cut into small discs of 1540.25 $mm^2$, and the small discs are placed horizontally in the air.

1 mL of electrolyte solution taken by the pipette is dropped on centers of the small discs, and timing is started to record the time when a wetting radius of the electrolyte solution is 10 mm.

A ratio of the wetting radius to the wetting time is calculated to obtain the liquid absorption rate v.

The present application uses the standard electrolyte solution as the test sample for testing. The specific formula of the electrolyte solution can refer to the formula of the electrolyte solution in the example.

In the embodiment of the present application, the porosity of the separator is a ratio of a pore volume in the separator to an overall volume of the separator, and can be detected using equipment and methods known in the art, for example, detected according to GB/T21650.2-2008 "Determination of pore size distribution and porosity of solid materials by mercury intrusion and gas adsorption method Part 2: Analysis of mesopores and macropores by gas adsorption method" and ASTMD2873-94el "Standard Test Method for Interior Porosity of Poly(Vinyl Choride) (PVC) Resins by Mercury Intrusion Porosimetry".

In some embodiments, the separator satisfies:

$$3.0 \leq \left[\frac{m_2-M}{m_1-M}\right] \times \frac{v}{\lambda} \leq 6.0.$$

When the separator satisfies the above conditions, its liquid absorption and liquid retention capabilities can be further improved, which can further reduce the liquid shortage during the cyclic charge and discharge process, reduce battery polarization, and improve the cycle performance of the battery cell.

Exemplarily, $\left[\frac{m_2-M}{m_1-M}\right] \times \frac{v}{\lambda}$ may be 1.5, 2.0, 2.5, 3.0, 3.2, 3.5, 3.8, 4.0, 4.5, 5.0, 5.5, 6.0, 6.5, 7.0, 7.5, 8.0, 8.5, 9.0, 9.5, 10.0, 12, or a range consisting of any two of the above values.

In some embodiments, the separator satisfies:

$$\frac{m_2-M}{m_1-M} \geq 25\%.$$

$m_2$-M represents a difference between the mass of the separator weighed under the pressure of 10,000 N in the ambient pressure after same is soaked in the electrolyte solution for 2 h and the mass of the separator that does not absorb the electrolyte solution, that is, $m_2$-M is the amount of liquid retained by the separator under external action, which can characterize the liquid retention capability of the separator.

$m_1$-M represents a difference between the mass of the separator weighed under the ambient pressure after same is soaked in the electrolyte solution for 2 h and the mass of the separator that does not absorb the electrolyte solution, that is, $m_1$-M is the amount of liquid absorbed by the separator, which can characterize the liquid absorption capability of the separator. $\frac{m_2-M}{m_1-M}$ can be defined as the liquid retention capability A.

When the separator meets the above conditions, the separator has strong liquid absorption and liquid retention capabilities, which can reduce liquid shortage during the cyclic charge and discharge process, reduce battery polarization, and improve the cycle performance of the battery cell.

Optionally,

$$\frac{m_2-M}{m_1-M} \geq 30\%.$$

Exemplarily, $\frac{m_2-M}{m_1-M}$ may be:

25.1%, 25.5%, 26%, 26.5%, 27%, 27.5%, 28%, 28.5%, 29%, 29.5%, 30%, 30.5%, 31%, 31.5%, 32%, 32.5%, 33%, 33.5%, 34%, 34.5%, 36%, 36.5%, 37%, 37.5%, 38%, 39%, 40%, 41%, 42%, 45%, 46%, 48%, 50%, 52%, 55%, 60%, 62%, 65%, 68%, 70%, 72%, 75%, 78%, 80%, 82%, 85%, 88%, 90%, 92%, 95%, 96%, 97%, 98%, 99%, or a range consisting of any two of the above values.

In some embodiments, the separator satisfies:

$$88\% \leq \frac{m_1-M}{\mathrm{M}} \times 100\% \leq 300\%.$$

$m_1$-M represents the ratio of the amount of liquid absorbed by the separator to the mass of the separator itself, which can characterize the liquid absorption capability of the separator, and can represent the amount of the electrolyte solution absorbed by the separator, and its liquid retention capability can also be relatively improved. $\frac{m_1-M}{\mathrm{M}} \times 100\%$ can be defined as the liquid retention rate of the separator.

When the separator satisfies the above conditions, the liquid absorption capability of the separator is relatively good, which is beneficial to improving the absorption rate of the electrolyte solution, thereby further improving the cycle performance of the battery cell.

Exemplarily, $\frac{m_1-M}{\mathrm{M}} \times 100\%$ maybe:

88%, 90%, 92%, 95%, 96%, 97%, 98%, 99%, 100%, 105%, 110%, 120%, 130%, 140%, 150%, 160%, 170%, 180%, 190%, 200%, 210%, 220%, 230%, 240%, 250%, 260%, 270%, 280%, 290%, 300% or a range consisting of any two of the above values.

In some embodiments, the separator satisfies:

$$22.5\% \leq \frac{m_2-M}{\mathrm{M}} \times 100\% \leq 300\%.$$

($m_2$-M)/M represents the ratio of the amount of liquid retained by the separator under external action to the mass of the separator itself, which can characterize the liquid retention capability of the separator. $\frac{m_2-M}{\mathrm{M}} \times 100\%$, can be defined as a liquid retention rate of the separator after pressurization.

When the separator satisfies the above conditions, under pressurized conditions, the separator has a relatively good liquid retention capability, and the electrolyte solution adsorbed by the separator is not prone to be squeezed out, thereby increasing a migration rate of active ions and further improving the cycle performance of the battery cell.

Exemplarily, $\frac{m_2-M}{\mathrm{M}} \times 100\%$ may be:

22.5%, 25.1%, 25.5%, 26%, 26.5%, 27%, 27.5%, 28%, 28.5%, 29%, 29.5%, 30%, 30.5%, 31%, 31.5%, 32%, 32.5%, 33%, 33.5%, 34%, 34.5%, 36%, 36.5%, 37%, 37.5%, 38%, 39%, 40%, 41%, 42%, 45%, 46%, 48%, 50%, 52%, 55%, 60%, 62%, 65%, 68%, 70%, 72%, 75%, 78%, 80%, 82%, 85%, 88%, 90%, 92%, 95%, 96%, 97%, 98%, 99%, 100%, 105%, 110%, 120%, 130%, 140%, 150%, 160%, 170%, 180%, 190%, 200%, 210%, 220%, 230%, 240%, 250%, 260%, 270%, 280%, 290%, 300% or a range consisting of any two of the above values.

In some implementations, $v/\lambda > 5.00$; and optionally, $5<v/\lambda<50$.

When the separator satisfies the above conditions, the liquid absorption capability of the separator is relatively good, which is beneficial to improving the absorption rate of the electrolyte solution, thereby further improving the cycle performance of the battery cell.

Exemplarily, $v/\lambda$ may be 5.1, 5.2, 5.5, 6, 6.5, 7, 8, 9, 10, 12, 15, 18, 20, 25, 30, 35, 40, 45, 46, 47, 48, 49, 49.5, 50, 55 or a range consisting of any two of the above values.

The polymer group has a mass percentage of 0.1% to 20% based on total mass of the separator.

When the mass percentage of the polymer group is within the above range, the separator has relatively good liquid absorption and liquid retention capabilities, which is beneficial to further improving the cycle performance of the battery cell.

Exemplarily, the mass percentage of the polymer group may be 0.1%, 0.2%, 0.5%, 0.8%, 1.0%, 1.5%, 2.0%, 3.0%, 4.0%, 5.0%, 6.0%, 7.0%, 8.0%, 9.0%, 10.0%, 11.0%, 12.0%, 13.0%, 14.0%, 15.0%, 16.0%, 17.0%, 18.0%, 19.0%, 20.0%, or a range consisting of any two of the above values.

The first polymer and the second polymer may include the same material or different materials. The first polymer may be a highly liquid-absorbing polymer, and the second polymer may be a highly liquid-retaining polymer.

When the first polymer and the second polymer are selected from the same material, the material may have both liquid absorption and liquid retention capabilities.

When the first polymer and the second polymer are selected from different materials, the liquid absorption capability of the first polymer may be stronger than that of the second polymer, and the liquid retention capability of the second polymer may be stronger than that of the first polymer. Optionally, the first polymer may include at least one of the ether polymer and the ester polymer. Optionally, the second polymer may include at least one of the fluoropolymer and the aldehyde-ketone polymer.

The first polymer and the second polymer may be each independently selected from at least one of the fluoropolymer, the ether polymer, the ester polymer, and the aldehyde-ketone polymer.

In some embodiments, the first polymer and the second polymer each independently include the fluoropolymer. Crystallinity of the fluoropolymer measured by differential scanning calorimetry is $X_{C1}$, and $0<X_{C1}\leq 30\%$. A melting temperature of the fluoropolymer is $T_{m1}$, a unit thereof is °C, and $0<T_{m1}\leq 140$.

Crystallization refers to a process in which atoms, ions or molecules in a material are arranged in a certain spatial order to form an orderly structure. The conformation of the polymer in the crystallization is determined by both intramolecular and intermolecular factors. An intermolecular force will affect a stacking density between molecular chains. The crystallinity $X_{C1}$ is used to characterize a degree of crystallization in the material, which can be measured by differential scanning calorimetry (DSC). Specifically, test steps are: 0.5 g to 0.8 g of a sample is taken, and placed in a carrier crucible, heating and cooling treatment is performed on the sample in a nitrogen atmosphere, the sample is heated from an initial temperature 20°C lower than the intrinsic $T_{g1}$ of the material to a cutoff temperature 20°C higher than the intrinsic $T_{m1}$ of the material at a heating rate of 10°C/min, and an actual glass transition temperature $T_{g1}$ and melting temperature $T_{m1}$ of the material are determined according to an endothermic and exothermic peak or transition point of the material in the process.

As a result, the fluoropolymer has relatively low crystallinity and melting temperature, which makes the molecular chain arrangement tend to be loose, an acting force between the molecular chains is small, adjacent molecular chains are easily opened, and a chain segment movement is achieved through intermolecular internal rotation, forming a molecular chain structure with high flexibility; and the fluoropolymer and the electrolyte solution in the battery cell can form a gel-like substance, thereby improving the cycle performance of the battery cell.

Exemplarily, the crystallinity $X_{C1}$ of the fluoropolymer measured by differential scanning calorimetry may be 5%, 10%, 15%, 20%, 25%, 30%, or a range consisting of any two of the above values.

Exemplarily, the melting temperature of the fluoropolymer may be 10°C, 20°C, 50°C, 70°C, 90°C, 100°C, 120°C, 140°C, or a range consisting of any two of the above values.

In some embodiments, the fluoropolymer has a glass transition temperature of $T_{g1}$, a unit thereof is °C., and $-150\leq T_{g1}\leq 60$.

The glass transition temperature is a transition temperature of chain segments of the polymer from freezing to movement. The glass transition temperature has a certain influence on the flexibility of the polymer molecular chain. The lower the glass transition temperature, the better the flexibility of the polymer molecular chain at a room temperature. The higher the glass transition temperature, the worse the flexibility of the molecular chain at the room temperature. The glass transition temperature may be measured by differential scanning calorimetry (DSC). The glass transition temperature of the polymer is relatively low, the flexibility of the chain segments of the molecular chain are better, and adjacent molecular chains are easier to open. Exemplarily, the glass transition temperature of the fluoropolymer may be -150°C, -120°C, -100°C, -80°C, -60°C, -30°C, 0°C, 30°C, 60°C, or a range consisting of any two of the above values.

In some embodiments, the fluoropolymer includes a building block represented by formula (AI),

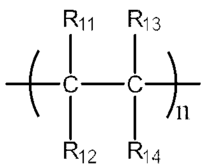

formula (AI).

In formula (AI), $R_{11}$, $R_{12}$, $R_{13}$ and $R_{14}$ each independently include a hydrogen atom, a fluorine atom, a bromine atom, a substituted or unsubstituted C1-C3 alkyl group or a substituted or unsubstituted C1-C3 alkoxy group, and at least one of $R_{11}$, $R_{12}$, $R_{13}$ and $R_{14}$ includes a fluorine atom.

In some embodiments, the fluoropolymer includes a building block represented by formula (AII),

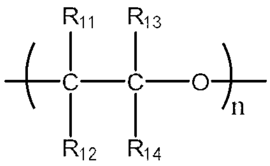 formula (AII).

In formula (AI) and formula (AII), $R_{11}$, $R_{12}$, $R_{13}$ and $R_{14}$ each independently include a hydrogen atom, a fluorine atom, a bromine atom, a substituted or unsubstituted C1-C3 alkyl group or a substituted or unsubstituted C1-C3 alkoxy group, and at least one of $R_{11}$, $R_{12}$, $R_{13}$ and $R_{14}$ includes a fluorine atom.

In some embodiments, the fluoropolymer includes a building block represented by formula (AII),

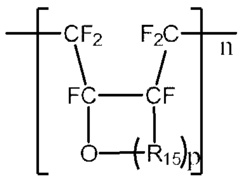 formula (AIII).

In formula (AIII), $R_{15}$ includes a single bond, and a substituted or unsubstituted C1-C3 alkyl group.

When the above groups are substituted, substituents may include one or more of a nitrile group (-CN), a nitro group, a sulfonic group, a sulfonyl group, amide, a carboxyl group, an ester group, and a halogen atom. The above substituents are high pressure resistant substituents and are more conducive to stabilizing the structure of the polymer. The halogen atom may include a fluorine atom, a chlorine atom, a bromine atom, etc. Optionally, the halogen atom includes a fluorine atom.

In the embodiments of the present application, the polymer may also be obtained by copolymerizing the above structural group with a small amount of other types of structural groups (e.g., an olefin building block, an ester monomer, a nitrile monomer, an amide monomer, and other building blocks, etc.).

In some embodiments, p is selected from positive integers from 1 to 3.

In some embodiments, a degree n of polymerization of the fluoropolymer is selected from positive integers from 1,000 to 30,000.

In some embodiments, $R_{11}$, $R_{12}$, $R_{13}$and $R_{14}$ each independently include a hydrogen atom, a fluorine atom, a bromine atom, a substituted or unsubstituted C1-C2 alkyl group, or a substituted or unsubstituted C1-C2 alkoxy group; and further optionally, $R_{11}$, $R_{12}$, $R_{13}$ and $R_{14}$ each independently include a hydrogen atom, a fluorine atom, a chlorine atom, a methyl group, a fluoromethyl group, a methoxy group or a perfluoromethoxy group.

In some embodiments, the fluoropolymer includes at least one of a building block represented by formula (AI-1) to a building block represented by formula (AI-11),

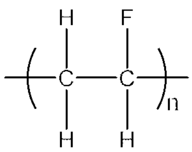 formula (AI-1), 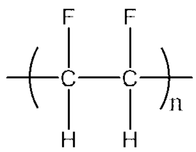 formula (AI-2), 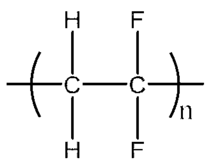 formula (AI-3),

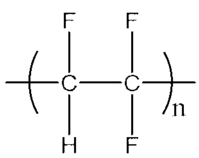 formula (AI-4), 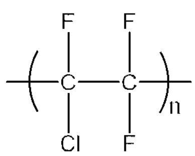 formula (AI-5), 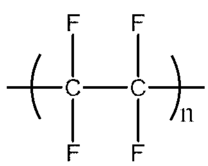 formula (AI-6),

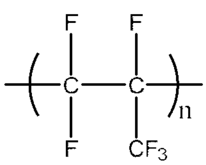 formula (AI-7), 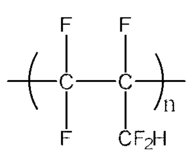 formula (AI-8), 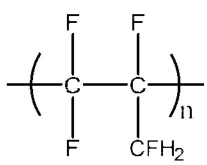 formula (AI-9),

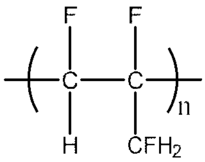 formula (AI-10), and 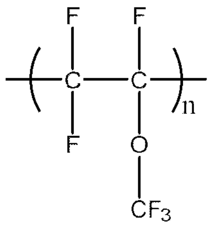 formula (AI-11).

In some embodiments, the fluoropolymer includes at least one of a building block represented by formula (AII-1) to a building block represented by formula (AII-5),

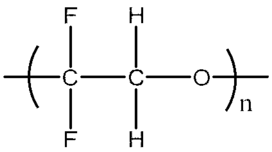 formula (AII-1), 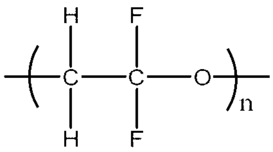 formula (AII-2),

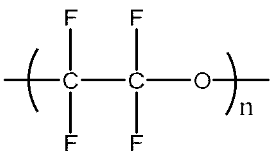 formula (AII-3), 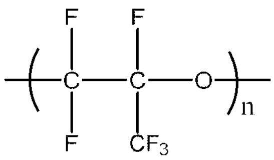 formula (AII-4),

and

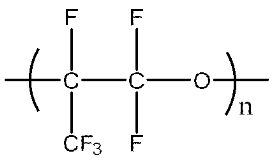 formula (AII-5).

In some embodiments, the fluoropolymer includes at least one of a building block represented by formula (AIII-1) to a building block represented by formula (AIII-3),

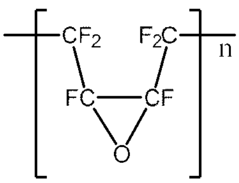 formula (AIII-1), 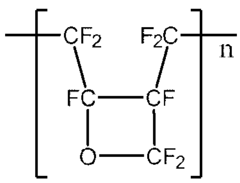 formula (AIII-2),

and

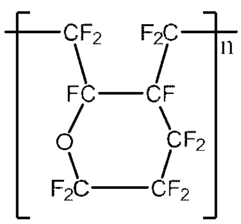 formula (AIII-3).

Exemplarily, the fluoropolymer includes one or more of polyperfluoroethylene (PTFE), polyvinylidene fluoride (PVDF), a perfluoroethylene propylene copolymer (FEP), a perfluoroalkoxy polymer (PFA), perfluoropolyether (PFPE), a polyvinylidene fluoride-hexafluoropropylene copolymer (PVDF-HFP), a polyvinylidene fluoride-trifluoroethylene copolymer (PVDF-TrFE), and a perfluoro(1-butenyl vinyl ether) polymer (CYTOP for short).

Optionally, the fluoropolymer includes one or more of polyperfluoroethylene (PTFE), polyvinylidene fluoride (PVDF), a perfluoroethylene propylene copolymer (FEP), a polyvinylidene fluoride-hexafluoropropylene copolymer (PVDF-HFP), and a polyvinylidene fluoride-trifluoroethylene copolymer (PVDF-TrFE).

The above fluoropolymer may be derived from one or more of the following monomers: fluorocyclohexane, vinyl fluoride, 1,2-difluoroethylene, vinylidene fluoride, trifluoroethylene, chlorotrifluoroethylene, tetrafluoroethylene, hexafluoropropylene,3,3,3-trifluoropropylene, trifluoropropylene, tetrafluoropropylene, pentafluoropropylene, etc. Optionally, the above fluoropolymer may be derived from at least two of the following monomers: fluorocyclohexane, vinyl fluoride, 1,2-difluoroethylene, vinylidene fluoride, trifluoroethylene, chlorotrifluoroethylene, tetrafluoroethylene, hexafluoropropylene,3,3,3-trifluoropropylene, trifluoropropylene, tetrafluoropropylene, and pentafluoropropylene.

The monomers used in the above fluoropolymer are all short-chain monomers, which are conducive to polymerization to form a straight-chain linear structure or a short-chain branched structure. This type of structure has a low degree of entanglement, which is conducive to improving the flexibility of the molecular chain. The molecular chain can fully stretch in the electrolyte solution, which is conducive to the formation of a three-dimensional gel-like substance by the polymer and the electrolyte solution, which is conducive to further improving the liquid absorption rate.

In some embodiments, the fluoropolymer n is selected from positive integers from 5,000 to 20,000.

In some embodiments, the molecular weight of the fluoropolymer is from $1.2\times10^5$ g/mol to $1.5\times10^6$ g/mol, optionally from $1.2\times10^5$ g/mol to $1.0\times10^6$ g/mol. When the molecular weight of the polymer is within the above range, it can ensure that the polymer exhibits a certain solubility in the electrolyte solution, while being not prone to be completely dissolved and dispersed by the electrolyte solution, which is beneficial to regulating the distribution and dispersion of the polymer; and it can further improve the flexibility between the molecular chains of the polymer, and the acting force between the molecular chains is relatively weak, which is beneficial for solvent molecules in the electrolyte solution to open the molecular chains, enter between the molecular chains, and be wrapped by the molecular chains, thereby facilitating active ions to enter the active substance through the solvent, realizing the smooth and rapid migration of the active ions. The polymer having a molecular weight within the above range is beneficial to improving the liquid absorption rate and liquid retention capability of the separator.

Exemplarily, the molecular weight of the polymer may be $1.2\times10^5$ g/mol, $2\times10^5$ g/mol, $5\times10^5$ g/mol, $8\times10^5$ g/mol, $1\times10^6$ g/mol, $1.5\times10^6$ g/mol, or a range consisting of any two of the above values.

[Ether polymer]

In some embodiments, the first polymer and the second polymer each independently include an ether polymer. The ester polymer is made into a sheet structural body. The sheet structural body is subjected to a dynamic frequency scanning test at $(T_{m2}+20)$°C to obtain an elasticity modulus G'-loss modulus G" curve, a slope of the elasticity modulus G'-loss modulus G" curve is $K_2$, $1<K_1<\infty$, and $T_{m2}$°C represents a melting temperature of the ester polymer.

Specifically, a preparation process of the sheet structural body is as follows: the ether polymer is vacuum-dried at 80° C for 12 h. The dried ether polymer is hot-pressed into a thin sheet by a flat vulcanizer. A hot pressing temperature is set to $(T_{m2}+20)$°C, a calendering thickness is 1-2 min, calendering time is 2 min, and a pressure is 8 MPa. After calendering for 2 min, the sample is taken out and placed on another vulcanizer of the same model for cold pressing at a pressure of 10 MPa. A round die with a diameter of 25 mm may be used to obtain a polymer disc (sheet structural body) of a fixed size. For example, the sheet structural body may be a disc with a thickness of 1-2 mm and a diameter of 25 mm; or the sample may be prepared according to a sample standard required by testing equipment.

According to the conclusions of classical linear viscoelasticity, for the polymer, especially a linear polymer, an elasticity modulus G'-loss modulus G" in a terminal region (an interval approaching a maximum angular velocity) of an elasticity modulus G'-loss modulus G" curve conforms to the frequency dependence, and a longest chain of the polymer plays a role in a viscoelastic behavior.

The specific steps of the dynamic frequency scanning test are as follows. The dynamic frequency scanning test is performed using a TA-AR2000EX rotational rheometer (TAinstruments, USA), with a parallel plate diameter of 25 mm and a thickness of 0.9 mm. To ensure that the test is conducted in a linear viscoelastic region, a strain during the dynamic frequency scanning test is 2%, a test temperature is $T_{m2}+20$°C, and a frequency scanning range of the test is: 500 rad/s$\leq w^2 \leq$0.05 rad/s, so as to obtain data in a low possible frequency region.

The dynamic frequency scanning test may characterize the degree of entanglement of molecular chains under solid phase melting (melt state). Compared with a linear structure or a short branched structure, a long branched structure, a network structure and a low cross-linked structure have a high degree of entanglement and will show deviation from a linear terminal behavior. The ether polymer shows a solid phase behavior. When the ether polymer of the present application satisfies the above range, an entanglement state of the molecular chains can be further reduced, which is beneficial to the diffusion of solvent molecules in the electrolyte solution between the molecular chains; and the ether polymer still maintains a certain entanglement state of the molecular chains, and can form a gel-like substance with the electrolyte solution, thereby improving the cycle performance and storage performance of the battery cell.

In some embodiments, $1<K_1\leq100$; and optionally, $1<K_1\leq10$. Exemplarily, $K_1$ may be 1.01, 1.1, 2, 5, 10, 15, 20, 30, 50, 100, 200, 500, 1,000, 5,000, 10,000 or a range consisting of any two of the above values.

In some embodiments, the glass transition temperature of the ether polymer is $T_{g2}$, a unit thereof is °C, $-100\leq T_{g2}\leq50$; and optionally, $-80\leq T_{g2}\leq30$. Exemplarily, the glass transition temperature of the ether polymer may be -100°C, -80°C, -60°C, - 30°C, 0°C, 30°C, 50°C, or a range consisting of any two of the above values.

In some embodiments, the ether polymer includes a building block represented by formula (BI),

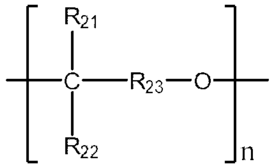
formula (BI).

In formula (BI), $R_{21}$ and $R_{22}$ each independently include a hydrogen atom, a substituted or unsubstituted C1-C3 alkyl group, or a substituted or unsubstituted C1-C3 alkoxy group; and $R_{23}$ includes a substituted or unsubstituted C1-C5 methylene group.

In some embodiments, $R_{21}$ and $R_{22}$ each independently include a hydrogen atom, a substituted or unsubstituted C1-C2 alkyl group.

In some embodiments, $R_{23}$ includes a single bond, a substituted or unsubstituted C1-C4 methylene group.

Exemplarily, the ether polymer includes at least one of a building block represented by formula (BI-1) and a building block represented by formula (BI-8),

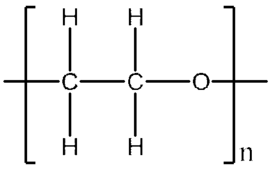
formula (BI-1),

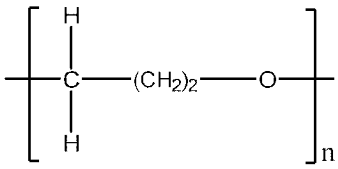
formula (BI-2),

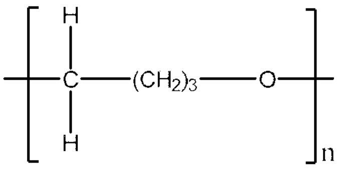
formula (BI-3),

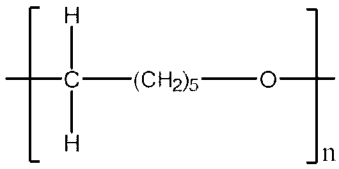
formula (BI-4),

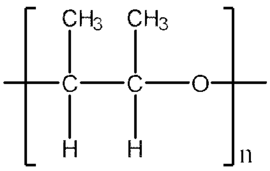
formula (BI-5),

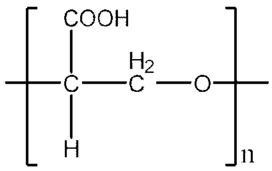
formula (BI-6),

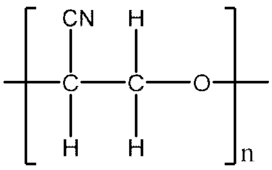
formula (BI-7), and

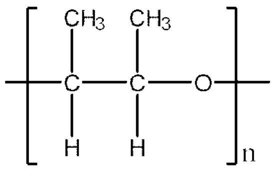
formula (BI-8).

In some embodiments, the ether polymer includes a building block represented by formula (BII),

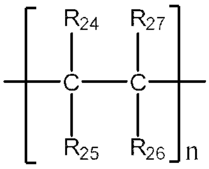
formula (BII).

In formula (BII), $R_{24}$ to $R_{27}$ each independently include a hydrogen atom, a substituted or unsubstituted C1-C3 alkyl group, a substituted or unsubstituted C1-C3 alkoxy group or an ether group, and at least one of $R_{24}$ to $R_{27}$ includes a substituted or unsubstituted C1-C3 alkoxy group or an ether group.

In some embodiments, $R_{24}$ to $R_{27}$ each independently include a hydrogen atom, a substituted or unsubstituted C1-C2 alkyl group, a substituted or unsubstituted C1-C2 alkoxy group or an ether group, and at least one of $R_{24}$ to $R_{27}$ includes a substituted or unsubstituted C1-C2 alkoxy group or an ether group.

In some embodiments, the ether polymer includes at least one of a building block represented by formula (BII-1) to a building block represented by formula (BII-7),

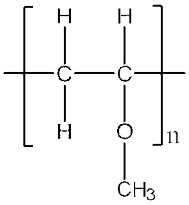
formula (BII-1),
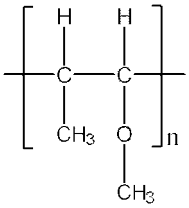
formula (BII-2),
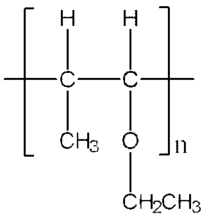
formula (BII-3),

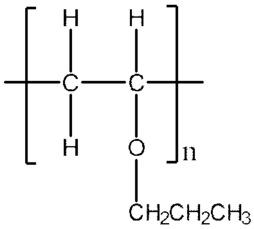
formula (BII-4),
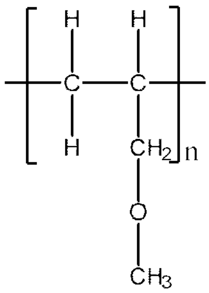
formula (BII-5),

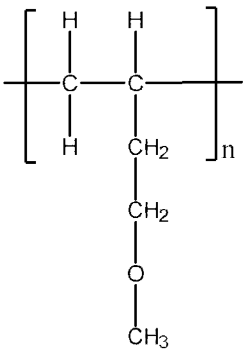
formula (BII-6), and
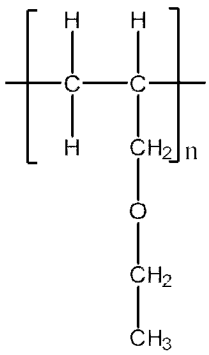
(BII-7).

The monomers used in the above ether polymers are polycyclic structures, such as structures with six-membered rings or less, or short-chain monomers, which are conducive to the polymerization to form a high-content -O- structure. This type of structure has a low degree of entanglement, which is conducive to improving the flexibility of the molecular chain. The molecular chain can fully stretch in the electrolyte solution and is easy to form a gel-like substance with the electrolyte solution, thereby improving the cycle performance and storage performance of the battery cell.

The above polymers are only examples of the structural group of the main molecular chain. In the embodiments of the present application, the polymers may further be obtained by copolymerizing the above structural group with other types of structural groups (e.g., an olefin building block, an ester monomer, a nitrile monomer, an amide monomer, and other building blocks, etc.).

When the above groups are substituted, substituents may include one or more of a nitrile group (-CN), a nitro group, a sulfonic group, a sulfonyl group, amide, a carboxyl group, an ester group, and a halogen atom. The above substituents are high pressure resistant substituents and are more conducive to stabilizing the structure of the polymer. The halogen atom may include a fluorine atom, a chlorine atom, a bromine atom, etc.

In some embodiments, a degree n of polymerization of the ether polymer is selected from positive integers from 1500 to 25,000.

Optionally, the degree n of polymerization of the ether polymer is selected from positive integers from 3,000 to 18,000.

In some embodiments, the polymer has a molecular weight of $1.2\times10^5$ g/mol to $1.0\times10^6$ g/mol.

Exemplarily, the molecular weight of the polymer may be $1.2\times10^5$ g/mol, $2\times10^5$ g/mol, $5\times10^5$ g/mol, $8\times10^5$ g/mol, $1\times10^6$ g/mol, or a range consisting of any two of the above values.

[Ester polymer]

In some embodiments, the first polymer and the second polymer each independently include an ester polymer. The ester polymer is made into a sheet structural body. The sheet structural body is subjected to a dynamic frequency scanning test at $(T_{m3}+20)$°C to obtain an elasticity modulus G'-loss modulus G" curve, a slope of the elasticity modulus G'-loss modulus G" curve is $K_2$, $1<K_2<\infty$, and $T_{m3}$°C represents a melting temperature of the ester polymer.

When the ester polymer of the embodiments of the present application satisfies the above range, an entanglement state of the molecular chains can be further reduced, which is beneficial to the diffusion of solvent molecules in the electrolyte solution between the molecular chains; and the ether polymer still maintains a certain entanglement state of the molecular chains, and can form a gel-like substance with the electrolyte solution, the liquid absorption rate can be improved, thereby improving the cycle performance and storage performance of the battery cell.

In some embodiments, $1<K_2\leq100$; and optionally, $1<K_2\leq10$.

Exemplarily, $K_2$ may be 1.01, 1.1, 1.2, 1.5, 2, 5, 10, 15, 20, 30, 50, 100, 200, 500, 1,000, 5,000, 10,000, or a range consisting of any two of the above values.

In some embodiments, the glass transition temperature of the ester polymer is $T_{g3}$, a unit thereof is °C, $-100\leq T_{g3}\leq50$; and optionally, $-80\leq T_{g3}\leq30$.

Exemplarily, the glass transition temperature of the ester polymer may be -100°C, -90°C, -80°C, -60°C, -30°C, 0°C, 30°C, 50°C, or a range consisting of any two of the above values.

In some embodiments, the ester polymer includes a building block represented by formula (CI),

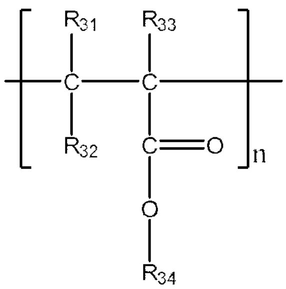

formula (CI).

In formula (CI), $R_{31}$, $R_{32}$ and $R_{33}$ each independently include a hydrogen atom, or a substituted or unsubstituted C1-C8 alkyl group; $R_{34}$ includes a substituted or unsubstituted C1-C8 alkyl group, or a substituted or unsubstituted C1-C8 hydroxyalkyl group; optionally, $R_{34}$ includes a substituted or unsubstituted C1-C6 alkyl group, or a substituted or unsubstituted C1-C6 hydroxyalkyl group.

Optionally, $R_{31}$ includes a hydrogen atom, or a substituted or unsubstituted methyl group.

Optionally, $R_{32}$ and $R_{33}$ each independently include a hydrogen atom.

Optionally, $R_{34}$ includes a substituted or unsubstituted C1-C4 alkyl group, or a substituted or unsubstituted C1-C4 hydroxyalkyl group.

Exemplarily, the ester polymer includes at least one of a building block represented by formula (CI-1) and a building block represented by formula (CI-15),

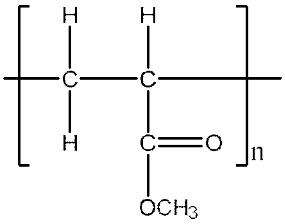
formula (CI-1),

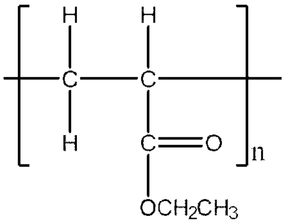
formula (CI-2),

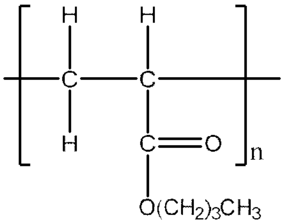
formula (CI-3),

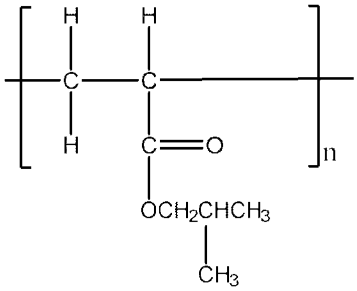
formula (CI-4),

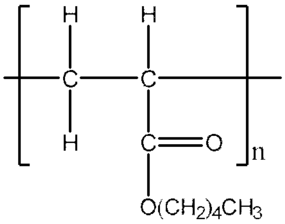
formula (CI-5),

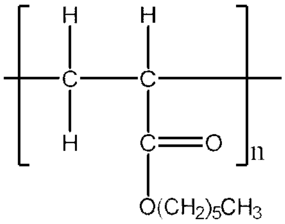
formula (CI-6),

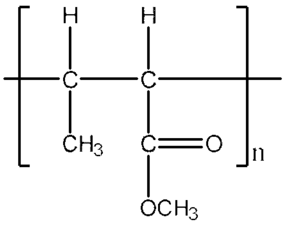
formula (CI-7),

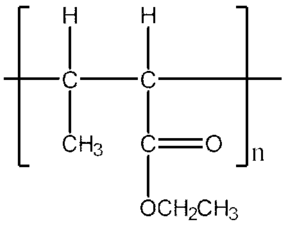
formula (CI-8),

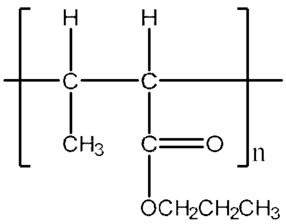
formula (CI-9),

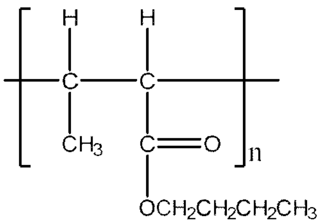
formula (CI-10),

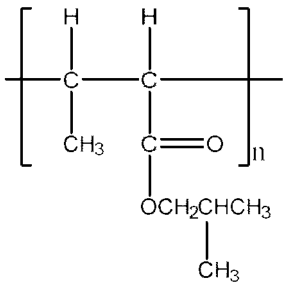
formula (CI-11),

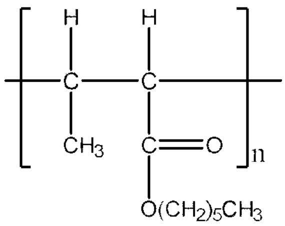
formula (CI-12),

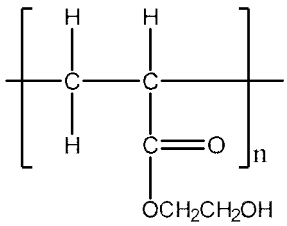 formula (CI-13), 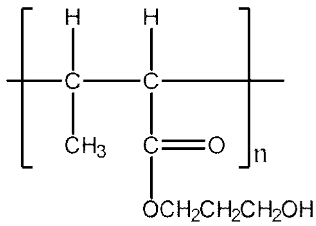 formula (CI-14),

and

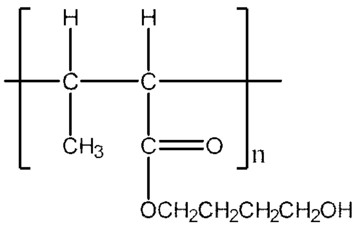 formula (CI-15).

In some embodiments, the ester polymer includes a building block represented by formula (CII),

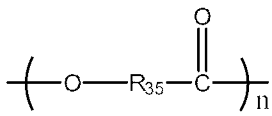 formula (CII).

In formula (CII), $R_{35}$ includes a substituted or unsubstituted C2-C6 methylene group.
Optionally, $R_{35}$ each independently includes a substituted or unsubstituted C2-C4 methylene group.
Exemplarily, the ester polymer includes at least one of a building block represented by formula (CII-1) and a building block represented by formula (CII-5),

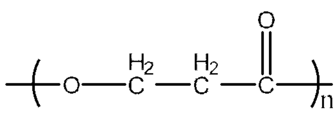 formula (CII-1), 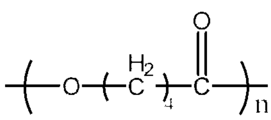 formula (CII-2),

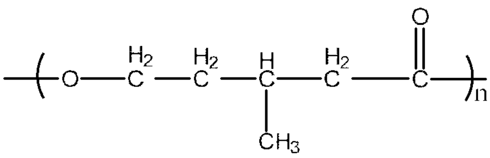 formula (CII-3), 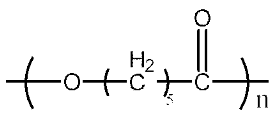 formula (CII-4),

and

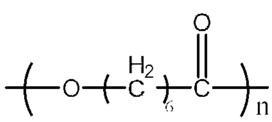 formula (CII-5).

The molecular chain of the above ester polymer has a low degree of entanglement, which is beneficial to improving the flexibility of the molecular chain. The molecular chain can fully stretch in the electrolyte solution and easily form a gel-like substance with the electrolyte solution.
The above polymers are only examples of the structural group of the main molecular chain. In the embodiments of the present application, the polymers may further be obtained by copolymerizing the above structural group with other types of structural groups (e.g., an olefin building block, an ester monomer, a nitrile monomer, an amide monomer, and other building blocks, etc.).

When the above groups are substituted, substituents may include one or more of a nitrile group (-CN), a nitro group, a sulfonic group, a sulfonyl group, amide, a carboxyl group, an ester group, and a halogen atom. The above substituents are high pressure resistant substituents and are more conducive to stabilizing the structure of the polymer. The halogen atom may include a fluorine atom, a chlorine atom, a bromine atom, etc.

In some embodiments, a degree n of polymerization of the ester polymer is selected from positive integers from 800 to 20,000.

Optionally, the degree n of polymerization of the ester polymer is selected from positive integers from 1000 to 15,000.

In some embodiments, a molecular weight of the ester polymer is $1.2\times10^5$ g/mol to $1.0\times10^6$ g/mol.

Exemplarily, the molecular weight of the Ester polymer may be $1.2\times10^5$ g/mol, $2\times10^5$g/mol g/mol, $5\times10^5$g/mol g/mol, $8\times10^5$ g/mol, $1\times10^6$ g/mol, $1.5\times10^6$ g/mol, or a range consisting of any two of the above values.

[Ketone-aldehyde polymer]

In some embodiments, the first polymer and the second polymer each independently include an aldehyde-ketone polymer. The aldehyde-ketone polymer is made into a sheet structural body. The sheet structural body is subjected to a dynamic frequency scanning test at $(T_{m4}+20)$°C to obtain an elasticity modulus G'-loss modulus G" curve, a slope of the elasticity modulus G'-loss modulus G" curve is $K_3$, $0.8<K_3<\infty$, and $T_{m4}$°C represents a melting temperature of the aldehyde-ketone polymer.

In some embodiments, $0.8\leq K_3\leq 100$; and optionally, $0.8\leq K_3\leq 10$.

Exemplarily, $K_3$ may be 0.8, 0.9, 1, 2, 5, 10, 15, 20, 30, 50, 100, 200, 500, 1,000, 5,000, 10,000 or a range consisting of any two of the above values.

In some embodiments, a glass transition temperature of the aldehyde-ketone polymer is $T_{g4}$, a unit thereof is °C, $-100\leq T_{g4}\leq 50$; and optionally, $-80\leq T_{g4}\leq 30$.

Exemplarily, the glass transition temperature of the aldehyde-ketone polymer may be -100°C, -90°C, -80°C, -60°C, - 30°C, 0°C, 30°C, 50°C, or a range consisting of any two of the above values.

In some embodiments, the aldehyde-ketone polymer includes a building block represented by formula (DI),

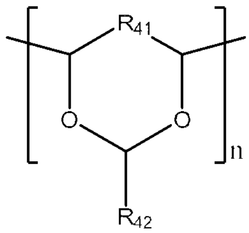

formula (DI).

In formula (DI), $R_{41}$ includes a single bond, and a substituted or unsubstituted C1-C6 methylene group; and $R_{42}$ includes a hydrogen atom, and a substituted or unsubstituted C1-C6 alkyl group.

Optionally, $R_{41}$ includes a single bond, a substituted or unsubstituted C1-C2 methylene group.

Optionally, $R_{42}$ includes a hydrogen atom, and a substituted or unsubstituted C1-C3 alkyl group.

In the embodiments of the present application, the single bond indicates that a group does not exist, and atoms on two sides of the group are connected by the single bond. For example, $R_{41}$ is a single bond, which indicates that carbon atoms on two sides of $R_{41}$ are connected by a single bond form.

Exemplarily, the aldehyde-ketone polymer includes at least one of a building block represented by formula (DI-1) to a building block represented by formula (DI-6),

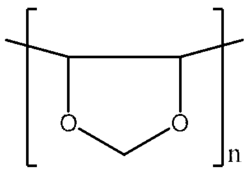

formula (DI-1),

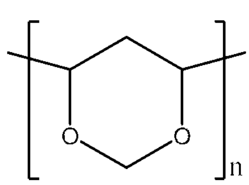

formula (DI-2),

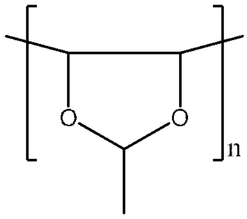

formula (DI-3),

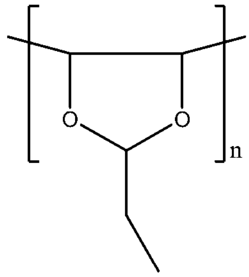

formula (DI-4),

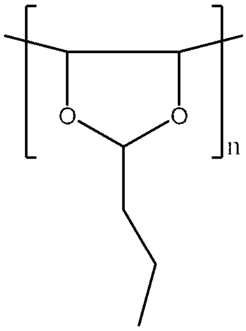

formula (DI-5), and

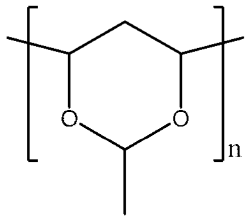

formula (DI-6).

In some embodiments, the aldehyde-ketone polymer includes a building block represented by formula (DII),

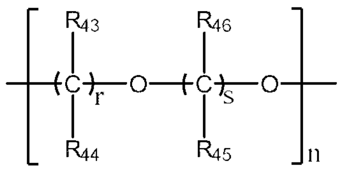

formula (DII).

In formula (DII), $R_{43}$ to $R_{46}$ each independently include a hydrogen atom, a hydroxyl group, a substituted or unsubstituted C1-C3 alkyl group, a substituted or unsubstituted C1-C3 hydroxyalkyl group, or a substituted or unsubstituted C1-C3 alkoxy group; r and s are each independently selected from integers from 0 to 5, and at least one of r and s is selected from a positive integer; optionally, $R_{43}$ to $R_{46}$ each independently include a hydrogen atom, a hydroxyl group, a substituted or unsubstituted C1-C3 alkyl group, a substituted or unsubstituted C1-C2 hydroxyalkyl group, or a substituted or unsubstituted C1-C2 alkoxy group.

In some embodiments, the aldehyde-ketone polymer includes at least one of a building block represented by formula (DII-1) to a building block represented by formula (DII-4),

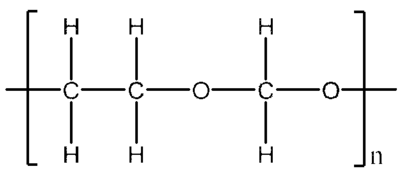

formula (DII-1),

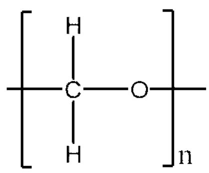

formula (DII-2),

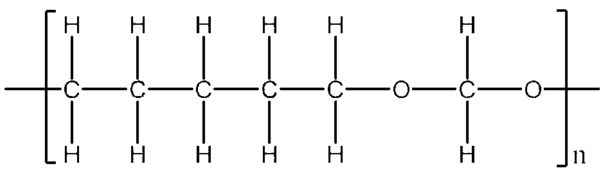

formula (DII-3),

and

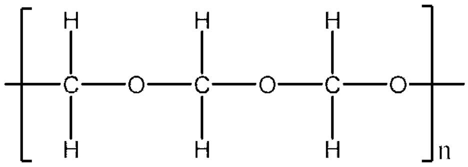

formula (DII-4).

The molecular chain of the above aldehyde-ketone polymer has a low degree of entanglement, which is beneficial to improving the flexibility of the molecular chain. The molecular chain can fully stretch in the electrolyte solution, which is conducive to forming a gel-like substance with the electrolyte solution.

The above polymers are only examples of the structural group of the main molecular chain. In the embodiments of the present application, the polymers may further be obtained by copolymerizing the above structural group with other types of structural groups (e.g., an olefin building block, an ester monomer, a nitrile monomer, an amide monomer, and other building blocks, etc.).

When the above groups are substituted, substituents may include one or more of a nitrile group (-CN), a nitro group, a sulfonic group, a sulfonyl group, amide, a carboxyl group, an ester group, and a halogen atom. The above substituents are high pressure resistant substituents and are more conducive to stabilizing the structure of the polymer. The halogen atom may include a fluorine atom, a chlorine atom, a bromine atom, etc.

In some embodiments, a degree n of polymerization of the aldehyde-ketone polymer is selected from positive integers from 500 to 15,000.

Optionally, the degree n of polymerization of the aldehyde-ketone polymer is selected from positive integers from 500 to 10,000.

In some embodiments, a molecular weight of the aldehyde-ketone polymer is $1.2\times10^5$ g/mol to $1.0\times10^6$ g/mol.

Exemplarily, the molecular weight of the aldehyde-ketone polymer may be $1.2\times10^5$ g/mol, $2\times10^5$ g/mol, $5\times10^5$ g/mol, $8\times10^5$ g/mol, $1\times10^6$ g/mol, $1.0\times10^6$ g/mol, or a range consisting of any two of the above values.

The relevant parameters of the polymer of the embodiments of the present application can be detected by the following method.

The groups of the polymer of the embodiments of the present application can be detected by infrared spectrophotometry (IR). Specifically, the liquid-retaining polymer is tested by a Thermo Nicolet Nexus 670 attenuated total reflection Fourier transform infrared spectrometer (FTIR-ATR), and then tested with reference to the standard GB/T6040-2002. A test range is: in the ATR method, 600 to 4000 $cm^{-1}$; repeatability: $\pm 2cm^{-1}$; resolution: better than $4cm^{-1}$; and a transmission depth 0.2 to 0.6 μm.

The structure of the polymer of the embodiments of the present application can be tested by nuclear magnetic resonance (NMR). Specifically, 1H NMR and 13C NMR are performed on a Varian Mercury Plus-400 nuclear magnetic resonance instrument, a test temperature is 20°C, TMS is an internal standard, $CDCl_3$ is used as a solvent, and a proton resonance frequency is 400 MHz.

A polymer monomer type of the polymer of the embodiments of the present application (especially suitable for a monomer that accounts for a small proportion in the polymer) can be tested by pyrolysis-gas chromatography-mass spectrometry, and specific test steps are as follows. 0.5 mg of a sample is accurately weighed, put into a sample cup, fixed to an injection rod, and then put into a pyrolyzer installed near a GC (gas chromatography) injection port. After a temperature of the pyrolyzer reaches a set temperature, an injection button is pressed, and the sample cup quickly falls into a core of a pyrolysis furnace by free fall. In an inert gas $N_2$ atmosphere, volatile components are instantly vaporized and carried into a gas chromatography column by a carrier gas for separation. Finally, it is detected by a flame ionization detector (FID) or a mass spectrometer (MS) to obtain a gas chromatogram or a total ion flow diagram.

The molecular weight of the polymer in the embodiments of the present application has a well-known meaning in the art, and can be measured using equipment and methods commonly used in the art. It can be tested by gel permeation chromatography (GPC). The specific testing steps are: an appropriate amount of a sample to be tested (a sample concentration is sufficient to ensure 8% to 12% shading) is taken, 20 ml of deionized water is added, and simultaneously external ultrasound treatment is performed for 5 min (53 KHz/120 W) to ensure that the sample is completely dispersed, and then the sample is measured according to a GB/T19077-2016/ISO 13320:2009 standard.

Or, a multi-angle laser light scattering instrument (MALLS) is used for testing, and specifically, a GPC combined with a Dawn Heleos II multi-angle laser light scattering apparatus, an Optilab T-rEX refractive index (RI) detector and a Visco Star II viscometer (Wyatt Technology Corporation, USA) is used. The test is perfromed at 30°, using tetrahydrofuran as a mobile phase at a flow rate of 1.0 ml/min, and commercial software ASTRA6 is used to process SEC-SAMLL data to obtain a molecular weight parameter.

In some embodiments, a polymer group is added to a first solvent at 70°C to form a polymer system; the polymer system is allowed to stand at 70°C for 8 h and at 25°C for ≥24 h, and then the polymer system is filtered through a 200-mesh filter to leave a first substance, wherein mass of the polymer group is q, and a unit thereof is g; mass of the first substance is

m, and a unit thereof is g; and the polymer group and the first substance satisfy: 5≤m/q≤1000. In particular, the performance of the liquid retaining polymer satisfies: 5≤m/q≤1000.

The polymer group has excellent liquid absorption performance and liquid retention performance, which is beneficial to improving the liquid absorption and liquid retention capabilities of the separator.

In some embodiments, 10≤m/q≤1000; and further optionally, 10≤m/q≤50. Exemplarily, m/q may be 5, 10, 20, 25, 28, 30, 32, 35, 40, 50, 80, 100, 200, 500, 1000 or a range consisting of any two of the above values.

The polymer system is allowed to stand at 70°C for 8 h and at 25°C for ≥24 h. After undergoing two stages of standing treatment, part of the polymer system is transformed into a gel-state substance through swelling and adsorption. The polymer system is in contact with the electrolyte solution, molecular chains of the polymer stretch and open, the electrolyte solution can diffuse between the molecular chains, and the molecular chains of the polymer swell and adsorb the electrolyte solution, which is beneficial to improving the liquid absorption and liquid retention capabilities of the separator, and can further improve the cycle performance of the battery cell.

Exemplarily, based on the mass of the polymer system, a ratio of a mass content of the polymer group to a mass content of the first solvent ranges from 1:100 to 1:10, such as 3:50.

Exemplarily, the first solvent is the same as or similar to the solvent of the electrolyte solution, and the first solvent may include at least one of a carbonate solvent and an ether solvent. For example, the carbonate solvent includes a cyclic carbonate solvent and/or a linear carbonate solvent.

As examples of the cyclic carbonate solvent, the cyclic carbonate solvent includes one or more of ethylene carbonate (EC), vinylene carbonate (VC), fluoroethylene carbonate (FEC), difluoroethylene carbonate (DFEC), vinyl ethylene carbonate (VEC), and dicaprylyl carbonate (CC).

As examples of the linear carbonate solvent, the linear carbonate solvent includes one or more of dimethyl carbonate (DMC), diethyl carbonate (DEC), ethyl methyl carbonate (EMC), diphenyl carbonate (DPC), methyl allyl carbonate (MAC), and polycarbonate (VA).

As examples of the ether solvent, the ether solvent includes one or more of tetrahydrofuran (THF), 2-methyltetrahydrofuran (2me-thf), 1,3-dioxolane (DOL), dimethoxymethane (DMM), 1,2-dimethoxyethane (DME), and diglyme (DG).

Optionally, the first solvent may also contain a lithium salt and an electrolyte solution additive at the same time, such as lithium hexafluorophosphate, vinylene carbonate (VC), fluorovinylene carbonate (FEC), etc.

In the present application, m/q is also referred to as a precipitation value, which characterizes a capability of a polymer group and a solvent to transform into a gel-state substance.

The first substance mainly includes the gel-state substance formed by the polymer group and the first solvent. In this type of gel-state substance, a molecular structure of the polymer will not change substantially.

In some embodiments, the first substance is dried at 80°C for 12 h to remove the first solvent in the first substance, and the first substance is mainly composed of the liquid-retaining polymer described above after drying, as tested by infrared spectrophotometry R0 or nuclear magnetic resonance (NMR).

The embodiments of the present application can achieve the stretching of the molecular chains of the polymer within a safe operating temperature range of the battery cell by increasing the temperature, thereby promoting the mutual attraction and physical bonding between the molecular chains of the polymer and the electrolyte solution. At a room temperature, the activity of molecular chain segments of the polymer group is reduced, and they remain attached to the separator and lock the electrolyte solution in a spatial environment where the polymer group is located, forming a gel or a gel-like state, which can increase a transmission rate of active ions such as lithium ions and improve the cycle performance.

In some embodiments, the separator includes a porous substrate, and the polymer group is distributed in pores of the porous substrate.

In some other embodiments, the separator includes a porous substrate, and a polymer layer disposed on at least one surface of the porous substrate. The polymer layer includes the polymer group. The polymer layer is disposed on at least one surface of the porous substrate, which means that the polymer layer can be disposed on one surface of the porous substrate, or can be disposed on two surfaces of the porous substrate. The polymer group can be dispersed in a solvent to form a polymer mixed system, and the polymer mixed system is coated on the porous substrate through a coating process such as atomization spraying and gravure coating.

The embodiments of the present application have no particular restrictions on a material of the porous substrate, and any known porous substrate with good chemical stability and mechanical stability can be selected. For example, the porous substrate may include at least one of a porous polyolefin-based resin film (such as at least one of polyethylene, polypropylene, and polyvinylidene fluoride), a porous glass fiber, and a porous non-woven fabric. The porous substrate may be a single-layer film or a multi-layer composite film. When the porous substrate is the multi-layer composite film, materials of layers may be the same or different.

In some embodiments, the porosity of the porous substrate is greater than or equal to 25%, optionally, 25% to 50%. When the porosity of the porous substrate is within the above range, the air permeability of the porous substrate can

be improved, which is beneficial to the migration of active ions. Moreover, since the porosity is relatively small, the mechanical properties of the porous substrate can be improved, and a good supporting effect can be provided for the polymer layer.

In some embodiments, a thickness of the porous substrate may be less than or equal to 16 μm, optionally from 5 μm to 12 μm. Exemplarily, the thickness of the porous substrate may be 1 μm, 2 μm, 3 μm, 5 μm, 10 μm, 12 μm, 15 μm, 16 μm, or a range consisting of any two of the above values.

Optionally, the polymer layer includes heat-resistant particles. A synergistic effect of the heat-resistant particles and the polymer group can further improve overall heat resistance and ion transmission performance of the separator. The polymer group and the heat-resistant particles can be dispersed in a solvent to form a polymer mixed system, and the polymer mixed system is coated on the porous substrate through a coating process such as atomization spraying and gravure coating.

In some embodiments, based on the total mass of the polymer layer, a ratio of a mass percentage of the polymer group to a mass percentage of the heat-resistant particles is (0.2 to 5.0):1, optionally (0.5 to 2.0):1. When the contents of heat-resistant particles and polymer group are in the above ranges, overall heat resistance and ion transmission performance of the separator can be further improved. Exemplarily, the ratio of the mass percentage of the polymer group to the mass percentage of the heat-resistant particles can be 0.2:1, 0.3:1, 0.4:1, 0.5:1, 0.6:1, 0.8:1, 1.0:1, 1.2:1, 1.5:1, 1.8:1, 2.0:1, 2.5:1, 2.8:1, 3.0:1, 3.2:1, 3.5:1, 3.8:1, 4.0:1, 4.2:1, 4.5:1, 4.8:1, 5.0:1 or a range consisting of any two of the above values.

In some embodiments, a thickness of the polymer layer may be 0.5 μm to 3.0 μm, optionally from 1.0 μm to 2.0 μm. When the thickness of the polymer layer is within the above range, the overall heat resistance and ion transmission performance of the separator can be further improved. Exemplarily, the thickness of the polymer layer may be 0.5 μm, 0.8 μm, 1.0 μm, 1.2 μm, 1.5 μm, 1.8 μm, 2.0 μm, 2.3 μm, 2.5 μm, 2.8 μm, 3.0 μm, or a range consisting of any two of the above values.

Optionally, the separator may further include a heat-resistant coating. The heat-resistant coating is located on at least one surface of the porous substrate, and the polymer layer is located on a side of the heat-resistant coating facing away from the porous substrate.

The heat-resistant coating includes heat-resistant particles. In some embodiments, the heat-resistant particles include at least one of inorganic particles and organic particles. The heat resistance of the separator can be improved by adding the heat-resistant particles.

In some embodiments, a mass percentage of the inorganic particles in the heat-resistant coating is ≤30. Exemplarily, the mass percentage of the inorganic particles in the heat-resistant coating is 1%, 2%, 3%, 4%, 5%, 6%, 7%, 8%, 9%, 10%, 15%, 20%, 25%, 30%, or a range consisting of any two of the above values.

The inorganic particles include at least one of inorganic particles having a dielectric constant of 5 or higher, inorganic particles having a capability to transmit active ions, and inorganic particles capable of undergoing electrochemical oxidation and reduction.

In some embodiments, the inorganic particles having the dielectric constant of 5 or higher may include at least one of boehmite (γ-AlOOH), aluminum oxide ($Al_2O_3$), barium sulfate ($BaSO_4$), magnesium oxide (MgO), magnesium hydroxide ($Mg(OH)_2$), silicon oxide $SiO_x$ ($0<x\leq2$), tin dioxide ($SnO_2$), titanium oxide ($TiO_2$), calcium oxide (CaO), zinc oxide (ZnO), zirconium oxide ($ZrO_2$), yttrium oxide ($Y_2O_3$), nickel oxide (NiO), hafnium dioxide ($HfO_2$), cerium oxide ($CeO_2$), zirconium titanate ($ZrTiO_3$), barium titanate ($BaTiO_3$), magnesium fluoride ($MgF_2$), $Pb(Zr,Ti)O_3$(abbreviated as PZT), $Pb_{1-m}La_mZr_{1-nTin}O_3$(abbreviated as PLZT,0<m<1, 0<n<1) and $Pb(Mg_3Nb_{2/3})O_3$-$PbTiO_3$(abbreviated as PMN-PT).

In some embodiments, the inorganic particles having the capability to transmit active ions may include at least one of lithium phosphate ($Li_3PO_4$), lithium titanium phosphate ($Li_xTi_y(PO_4)_3$, 0<x<2, 0<y<3), lithium aluminum titanium phosphate ($Li_xAl_yTi_z(PO_4)_3$, 0<x<2, 0<y<1, 0<z<3), $(LiAlTiP)_xO_y$ type glass (0<x<4, 0<y<13), lithium lanthanum titanate ($Li_xLa_yTiO_3$, 0<x<2, 0<y<3), lithium germanium thiophosphate ($Li_xGe_yP_zS_w$, 0<x<4, 0<y<1, 0<z<1, 0<w<5), lithium nitride ($Li_xN_y$, 0<x<4, 0<y<2), $SiS_2$ type glass ($Li_xSi_yS_z$, 0<x<3, 0<y<2, 0<z<4), and $P_2S_5$ type glass ($Li_xP_yS_z$, 0<x<3, 0<y<3, 0<z<7).

In some embodiments, the inorganic particles capable of undergoing electrochemical oxidation and reduction may include at least one of lithium-containing transition metal oxide, lithium-containing phosphate of an olivine structure, a carbon-based material, a silicon-based material, a tin-based material, and a lithium-titanium compound.

In some embodiments, the heat-resistant coating may also include other organic particles, for example, the organic particles may include at least one of polystyrene, polyethylene, polyimide, melamine resin, phenolic resin, polypropylene, polyester (e.g., polyethylene terephthalate, polyethylene naphthalate, polybutylene terephthalate), polyphenylene sulfide, polyaramid, polyamideimide, polyimide, a copolymer of butyl acrylate and ethyl methacrylate, and a mixture thereof.

In some embodiments, the heat-resistant coating may further include a binder. As an example, the binder may include at least one of aqueous solution type acrylic resin (e.g., homopolymer of acrylic acid, methacrylic acid and a sodium acrylate monomer or a copolymer with other comonomers), polyvinyl alcohol (PVA), an isobutylene-maleic anhydride

copolymer and polyacrylamide.

In some embodiments, the heat-resistant coating has a thickness of ≤4 μm. Therefore, this helps to improve the energy density of the battery cell. In the embodiments of the present application, the thickness of the heat-resistant coating refers to the thickness of the heat-resistant coating located on a single side of the substrate. Exemplarily, the thickness of the heat-resistant coating may be 0.1μm, 0.5μm, 1μm, 1.5μm, 2μm, 2.5μm, 3μm, 3.5μm, 4μm, or a range consisting of any two of the above values.

In some embodiments, a coating weight of the polymer group is 0.5 mg/1540.25 $mm^2$ to 5 mg/1540.25 $mm^2$.

When the coating weight is within the above range, the capability to form a gel-like substance with the electrolyte soluton can be further improved, thereby increasing the liquid absorption rate.

Optionally, the coating weight of the polymer group is 0.5 mg/1540.25 $mm^2$ to 3.5 mg/1540.25 $mm^2$.

Exemplarily, the coating weight of the liquid-retaining polymer per unit area of the separator may be 0.5 mg/1540.25 $mm^2$, 0.8 mg/1540.25 $mm^2$, 1.0 mg/1540.25 $mm^2$, 1.2 mg/1540.25 $mm^2$, 1.3 mg/1540.25 $mm^2$, 1.5 mg/1540.25 $mm^2$, 2.0 mg/1540.25 $mm^2$, 2.2 mg/1540.25 $mm^2$, 2.5 mg/1540.25 $mm^2$, 3 mg/1540.25 $mm^2$, 3.5 mg/1540.25 $mm^2$, 4 mg/1540.25 $mm^2$, 4.5 mg/1540.25 $mm^2$, 5 mg/1540.25$mm^2$, or a range consisting of any two of the above values.

In the embodiments of the present application, the coating weight refers to the coating weight of the liquid-retaining polymer on a single surface of the separator, which can be detected by using equipment and methods known in the art. For example, by cutting the same mother roll substrate and the separator into small discs of 1540.25 $mm^2$, and respectively weighing weights of 10 small discs of the separator, the coating weight of the highly liquid-absorbent polymer in the separator can be obtained by calculation.

## Battery cell

In a second aspect, an embodiment of the present application proposes a battery cell. The battery cell includes an electrode assembly and an electrolyte. The electrode assembly includes a positive electrode plate, a negative electrode plate and a separator. The separator is disposed between the positive electrode plate and the negative electrode plate, and the separator includes a separator of any embodiment of the first aspect of the present application.

[Positive electrode plate]

The positive electrode plate includes a positive electrode current collector and a positive electrode active substance layer disposed on at least one surface of the positive electrode current collector.

As an example, the positive electrode current collector has two surfaces opposite in its own thickness direction, and the positive electrode active substance layer is disposed on either one or both of the two opposite surfaces of the positive electrode current collector.

The positive electrode active substance layer includes a positive electrode active substance. The positive electrode active substance can be a positive electrode active substance for a battery cell known in the art. As an example, the positive electrode active substance may include at least one of the following materials: a lithium-containing phosphate compound, lithium-containing transition metal oxide, a sodium-containing phosphate compound, and sodium-containing transition metal oxide.

Exemplarily, a general formula of an olivine-type phosphate active substance (lithium-containing phosphate compound) is:$Li_xA_yMe_aM_bP_{1-c}X_cY_z$, wherein $0 \le x \le 1.3$, $0 \le y \le 1.3$, and $0.9 \le x+y \le 1.3$; $0.9 \le a \le 1.5$, $0 \le b \le 0.5$, and $0.9 \le a+b \le 1.5$; $0 \le c \le 0.5$; $3 \le z \le 5$; A includes one or more of Na, K, and Mg; Me includes one or more of Mn, Fe, Co, and Ni; M includes one or more of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce; X includes one or more of S, Si, Cl, B, C, and N; and Y includes one or more of O and F. Specifically, the olivine-type phosphate active substance includes one or more of $LiFePO_4$, $LiMnPO_4$, $LiNiPO_4$, and $LiCoPO_4$.

Exemplarily, the lithium transition metal oxide (layered materials such as ternary, lithium/sodium nickel oxide, lithium/sodium cobalt oxide, lithium/sodium manganate, lithium-rich layered and rock salt phase layered materials). The general formula of the layered structure positive electrode active substance is: $Li_xA_yNi_aCo_bMn_cM_{(1-a-b-c)}Y_z$, wherein $0 \le x \le 2.1$, $0 \le y \le 2.1$, and $0.9 \le x+y \le 2.1$; $0 \le a \le 1$, $0 \le b \le 1$, $0 \le c \le 1$, and $0.1 \le a+b+c \le 1$; $1.8 \le z \le 3.5$; A includes one or more of Na, K, and Mg; M includes one or more of B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; Y includes one or more of O and F. Optionally, y=0. Specifically, the layered structure positive electrode active substance may include one or more of lithium cobalt oxide (LCO), lithium nickel oxide (LNO), lithium manganese oxide (LMO), $LiNi_{1/3}Co_{1/3}Mn_{1/3}O_2$(NCM333), $LiNi_{0.5}Co_{0.2}Mn_{0.3}O_2$(NCM523), $LiNi_{0.6}Co_{0.2}Mn_{0.2}O_2$(NCM622), $LiNi_{0.8}Co_{0.1}Mn_{0.1}O_2$(NCM811) and NCA.

In some embodiments, the positive electrode current collector can be a metal foil or a composite current collector. As an example of the metal foil, an aluminum foil or an aluminum alloy foil can be used. The composite current collector may include a high molecular material substrate layer and a metal material layer formed on at least one surface of the high

molecular material substrate layer. As an example, the metal material may include one or a combination of more than one selected from aluminum, an aluminum alloy, nickel, a nickel alloy, titanium, a titanium alloy, silver, and a silver alloy. The high molecular material substrate layer may include one or a combination of more than one selected from polypropylene (PP), polyethylene terephthalate (PET), polybutylene terephthalate (PBT), polystyrene (PS), and polyethylene (PE).

In some embodiments, the positive electrode active substance layer further optionally includes a positive electrode conductive agent. In the embodiments of the present application, a type of the positive electrode conductive agent is not specifically limited, and as an example, the positive electrode conductive agent includes one or a combination of more than one selected from superconducting carbon, conductive black, conductive graphite, acetylene black, carbon black, Ketjen black, carbon dots, carbon nanotubes, graphene, and carbon nanofibers. In some embodiments, based on total mass of the positive electrode active substance layer, a mass percentage of the positive electrode conductive agent is below 5%.

In some embodiments, the positive electrode active substance layer further optionally includes a positive electrode binder. In the embodiments of the present application, a type of the positive electrode binder is not specifically limited, and as an example, the positive electrode binder may include one or a combination of more than one selected from polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorinated acrylate resin. In some embodiments, based on the total mass of the positive electrode active substance layer, the mass percentage of the positive electrode binder is below 5%. Compared with the crystallinity of the fluoropolymer of the embodiments of the present application, the crystallinity of the positive electrode binder is higher. Compared with the melting temperature of the fluoropolymer of the embodiments of the present application, the melting temperature of the positive electrode binder is higher.

The positive electrode active substance layer is usually formed by coating a positive electrode slurry on the positive electrode current collector, followed by drying and cold pressing. The positive electrode slurry is generally formed by dispersing the positive electrode active substance, the optional conductive agent, the optional binder and any other components in a solvent and evenly stirring the mixture. The solvent may be N-methyl pyrrolidone (NMP), but is not limited thereto. Of course, the preparation of the positive electrode plate is not limited to the above method, and the preparation method described above can also be used.

[Negative electrode plate]

In some embodiments, the negative electrode plate includes a negative electrode current collector and a negative electrode active substance layer disposed on at least one surface of the negative electrode current collector and including a negative electrode active substance.

Exemplarily, the negative electrode current collector has two surfaces opposite in its own thickness direction, and the negative electrode active substance layer is disposed on either one or both of the two opposite surfaces of the negative electrode current collector.

The negative electrode active substance can be a negative electrode active substance for a battery cell known in the art. As an example, the negative electrode active substance may include, but is not limited to, at least one of natural graphite, artificial graphite, soft carbon, hard carbon, a silicon-based material, a tin-based material, and lithium titanate. The silicon-based material may include at least one of monatomic silicon, silicon oxide, a silicon-carbon composite, a silicon-nitrogen composite, and a silicon alloy material. The tin-based material may include at least one of monatomic tin, tin oxide, and a tin alloy material.

In some embodiments, the negative electrode active substance layer further optionally includes a negative electrode conductive agent. In the embodiments of the present application, a type of the negative electrode conductive agent is not specifically limited, and as an example, the negative electrode conductive agent may include at least one of superconducting carbon, conductive graphite, acetylene black, carbon black, Ketjen black, carbon dots, carbon nanotubes, graphene, and carbon nanofibers. In some embodiments, based on total mass of the negative electrode active substance layer, a mass percentage of the negative electrode conductive agent is ≤5%.

In some embodiments, the negative electrode active substance layer further optionally includes a negative electrode binder. In the embodiments of the present application, a type of the negative electrode binder is not specifically limited, and as an example, the negative electrode binder may include at least one of styrene butadiene rubber (SBR), water-soluble unsaturated resin SR-1B, water-based acrylic resin (such as polyacrylic acid (PAA), polymethacrylic acid (PMAA), and polyacrylic acid sodium (PAAS)), polyacrylamide (PAM), polyvinyl alcohol (PVA), sodium alginate (SA), and carboxymethyl chitosan (CMCS). In some embodiments, based on total mass of the negative electrode active substance layer, a mass percentage of the negative electrode binder is ≤5%.

In some embodiments, the negative electrode active substance layer further optionally includes auxiliaries. As an example, the other auxiliaries may include a thickener, such as carboxymethyl cellulose sodium (CMC) and a PTC thermistor material. In some embodiments, based on total mass of the negative electrode active substance layer, a mass

percentage of the other auxiliaries is ≤2%.

In some embodiments, the negative electrode current collector can be a metal foil or a composite current collector. As an example of the metal foil, a copper foil can be used. The composite current collector may include a high molecular material substrate layer and a metal material layer formed on at least one surface of the high molecular material substrate layer. As an example, the metal material may include at least one of copper, a copper alloy, nickel, a nickel alloy, titanium, a titanium alloy, silver, and a silver alloy. As an example, the high molecular material substrate layer may include at least one of polypropylene (PP), polyethylene terephthalate (PET), polybutylene terephthalate (PBT), polystyrene (PS), and polyethylene (PE).

The negative electrode active substance layer is usually formed by coating a negative electrode slurry on the negative electrode current collector, followed by drying and cold pressing. The negative electrode slurry is generally formed by dispersing the negative electrode active substance, the optional conductive agent, the optional binder, and the other optional auxiliaries in a solvent and evenly stirring a mixture. The solvent may be N-methyl pyrrolidone (NMP) or deionized water, but is not limited thereto. Of course, the preparation of the negative electrode plate is not limited to the above method, and the preparation method described above can also be used.

The negative electrode plate does not exclude other additional functional layers other than the negative electrode active substance layer. For example, in some examples, the negative electrode plate in the present application further includes a conductive primer coating (e.g., composed of a conductive agent and a binder) sandwiched between the negative electrode current collector and the negative electrode active substance layer and disposed on a surface of the negative electrode current collector. In some other examples, the negative electrode plate of the present application further includes a protective layer covering a surface of the negative electrode active substance layer.

[Electrolyte]

During a charge and discharge process of the battery cell, active ions are intercalated and deintercalated back and forth between the positive electrode plate and the negative electrode plate, and the electrolyte solution serves to conduct the active ions between the positive electrode plate and the negative electrode plate. The present application has no specific limitation on a type of the electrolyte solution, which can be selected according to actual requirements.

The electrolyte solution includes an electrolyte salt and a solvent. Types of the electrolyte salt and the solvent are not specifically limited, and may be selected according to actual requirements.

When the battery cell of the present application is a lithium-ion battery, as an example, the electrolyte salt may include, but is not limited to at least one of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate ($LiPO_2F_2$), lithium difluoro bis(oxalato)phosphate (LiDFOP), and lithium tetrafluoro(oxalato)phosphate (LiTFOP).

When the battery cell of the present application is a sodium-ion battery, as an example, the electrolyte salt may include, but is not limited to at least one of sodium hexafluorophosphate ($NaPF_6$), sodium tetrafluoroborate ($NaBF_4$), sodium perchlorate ($NaClO_4$), sodium hexafluoroarsenate ($NaAsF_6$), sodium bis(fluorosulfonyl)imide (NaFSI), sodium bis(trifluoromethanesulfonyl)imide (NaTFSI), sodium trifluoromethanesulfonate (NaTFS), sodium difluoro(oxalato)borate (NaDFOB), sodium bis(oxalate)borate (NaBOB), sodium difluorophosphate ($NaPO_2F_2$), sodium difluoro bis(oxalato) phosphate (NaDFOP), and sodium tetrafluoro(oxalato)phosphate (NaTFOP).

As an example, the solvent may include, but is not limited to at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methylsulfonylmethane (MSM), ethyl methyl sulfone (EMS), ethylsulfonylethane (ESE), tetrahydrofuran (THF), 2-methyltetrahydrofuran (2me-thf), 1,3-dioxolane (DOL), dimethoxymethane (DMM), 1,2-dimethoxyethane (DME), and diglyme (DG).

In some embodiments, the electrolyte solution further optionally includes an additive. For example, the additive may include a negative electrode film-forming additive, or may include a positive electrode film-forming additive, and may further include an additive capable of improving certain performances of a battery, such as an additive for improving overcharging performance of the battery, an additive for improving high temperature performance of the battery, an additive for improving low temperature power performance of the battery, etc.

In some embodiments, the positive electrode plate, the separator, and the negative electrode plate may be made into an electrode assembly by a winding process and/or a stacking process.

In some embodiments, the battery cell may comprise an outer package. The outer package can be used to encapsulate the above electrode assembly and the electrolyte solution.

In some embodiments, the outer package of the battery cell can be a hard shell, such as a hard plastic shell, an aluminum shell, and a steel shell. The outer package of the battery cell may also be a soft package, such as a bag-type soft package. A material of the soft package can be plastic, such as at least one of polypropylene (PP), polybutylene terephthalate (PBT), and polybutylene succinate (PBS).

In some embodiments, the positive electrode plate, the separator, and the negative electrode plate may be made into the electrode assembly by a winding process or a stacking process.

The shape of the battery cell is not particularly limited in the present application, and may be a cylinder shape, a square shape, or any other shape. For example, FIG. 1 shows a battery cell 5 of a square structure as an example.

In some examples, as shown in FIG. 1 and FIG. 2, the outer package may include a housing 51 and a cover plate 53. The housing 51 may include a bottom plate and a side plate connected to the bottom plate, and the bottom plate and the side plate enclose to form an accommodating cavity. The housing 51 has an opening in communication with the accommodating cavity, and the cover plate 53 is configured to cover the opening to close the accommodating cavity. The positive electrode plate, the negative electrode plate, and the separator may form the electrode assembly 52 by a winding process or a stacking process. The electrode assembly 52 is encapsulated in the accommodating cavity. The electrode assembly 52 is impregnated with the electrolyte solution. A number of the electrode assembly 52 included in the battery cell 5 can be one or more, and can be adjusted according to requirements.

A preparation method for the battery cell of the present application is well known. In some examples, the positive electrode plate, the separator, the negative electrode plate, and the electrolyte solution may be assembled to form the battery cell. As an example, the positive electrode plate, the separator, and the negative electrode plate may form the electrode assembly by a winding process or a stacking process. The electrode assembly is placed in the outer package. The electrolyte solution is poured in after drying. The battery cell is obtained through processes such as vacuum encapsulation, standing, formation, and shaping.

In some examples of the present application, the battery cell according to the present application can be assembled into a battery module, a plurality of battery cells may be included in the battery module, and a specific number can be adjusted according to the application and capacity of the battery module.

FIG. 3 is a schematic view of a battery module 4 as an example. As shown in FIG. 3, in the battery module 4, a plurality of battery cells 5 can be sequentially arranged in a length direction of the battery module 4. Of course, any other arrangements are also possible. The plurality of battery cells 5 may further be fixed by fasteners.

Optionally, the battery module 4 may further include a shell having an accommodating space, and the plurality of battery cells 5 are accommodated in the accommodating space.

In some examples, the above battery modules can further be assembled into a battery pack, and the number of battery modules included in the battery pack can be adjusted according to the application and capacity of the battery pack.

Both the battery module 4 and the battery pack can be used as specific examples of batteries in the embodiments of the present application.

FIG. 4 and FIG. 5 are schematic views of a battery pack 1 as an example. As shown in FIG. 4 and FIG. 5, the battery pack 1 may include a battery box and a plurality of battery modules 4 arranged in the battery box. The battery box includes an upper box body 2 and a lower box body 3, where the upper box body 2 is configured to cover the lower box body 3 to form an enclosed space for accommodating the battery modules 4. The plurality of battery modules 4 may be arranged in the battery box in any manner.

## Electrical apparatus

In a third aspect, the present application provides an electrical apparatus, and the electrical apparatus includes at least one of the battery cell, the battery module, and the battery pack of the present application. The battery cell, the battery module, and the battery pack may be used as a power source of the electrical apparatus, or may be used as an energy storage unit of the electrical apparatus. The electrical apparatus may be, but is not limited to, a mobile device (such as a mobile phone and a laptop), an electric vehicle (such as an all-electric vehicle, a hybrid electric vehicle, a plug-in hybrid electric vehicle, an electric bicycle, an electric scooter, an electric golf cart, and an electric truck), an electric train, a ship, a satellite, an energy storage system, etc.

For the electrical apparatus, the battery cell, the battery module, or the battery pack can be selected according to use requirements thereof. FIG. FIG. 6 are schematic views of a electrical apparatus as an example. This electrical apparatus 6 is an all-electric vehicle, a hybrid electric vehicle, or a plug-in hybrid electric vehicle, etc. In order to meet the requirements of the electrical apparatus for high power and high energy density, a battery pack 1 or a battery module may be used. As another example, the electrical apparatus may be a mobile phone, a tablet personal computer, a laptop, etc. The electrical apparatus is generally required to be thin and light, and may use a battery cell as a power source.

## Example

Examples of the present application will be described below. The examples described below are exemplary and only used to explain the present application, and are not to be construed as limiting the present application. Where specific techniques or conditions are not specified in the examples, the techniques or conditions described in the literature of the art or the product specifications are followed. Reagents or instruments used without indicating manufacturers are all routine products that are commercially available.

### Example 1 Preparation of a lithium-ion battery

(1) Preparation of a positive electrode plate:
an aluminum foil with a thickness of 12 μm is used as a positive electrode current collector.
A positive electrode active substance $LiNi_{0.6}Co_{0.2}Mn_{0.2}O_2$ (NCM622) , a conductive agent carbon black, and a binder polyvinylidene fluoride (PVDF) are fully stirred and mixed in an appropriate amount of N-methylpyrrolidone (NMP) to prepare a positive electrode slurry. The mass ratio of NCM622, the conductive carbon black and the PVDF in the positive electrode slurry is 97.5:1.4:1.1. The positive electrode slurry is coated on a current collector aluminum foil, vacuum-dried at 100°C, then cold-pressed, then subjected to edge cutting, slicing, and striping, and then dried at 85°C under a vacuum condition for 4 h, to prepare the positive electrode plate.
(2) Preparation of a negative electrode plate:
a copper foil with a thickness of 8 μm is used as a negative electrode current collector.
A negative electrode active substance artificial graphite, a conductive agent carbon black, a binder styrene butadiene rubber (SBR), and a thickener sodium carboxymethylcellulose (CMC-Na) are mixed evenly according to a weight ratio of 97.4: 2: 0.5: 0.1 and then added to deionized water to prepare a negative electrode slurry. The negative electrode slurry is coated on the current collector copper foil, dried at 85°C, cold-pressed, then subjected to edge cutting, slicing, and striping, and then dried at 120°C under a vacuum condition for 12 h, to prepare the negative electrode plate.
(3) Preparation of an electrolyte solution:
in an environment with a water content of less than 10 ppm, non-aqueous organic solvents ethylene carbonate, ethyl methyl carbonate, and dimethyl carbonate are mixed according to a volume ratio of 1:1:1 to obtain a solvent the electrolyte solution, and then lithium salt $LiPF_6$ and the mixed solvent are mixed and configured into the electrolyte solution with a lithium salt concentration of 1 mol/L.
(4) Preparation of a separator

A polyethylene film (PE) of 7 μm is used as a substrate.

A polymer group is dispersed in a dimethyl carbonate (DMC) solvent to form a mixed system, and the mixed system is atomized and sprayed on two surfaces of the polyethylene film to form polymer layers respectively. An atomizing solvent is water, and a mass content of the mixed system is 1%.

(5) Preparation of a lithium-ion battery:

The positive electrode plate, the separator, and the negative electrode plate above are stacked in order, so that the separator is located between the positive electrode plate and the negative electrode plate to play a separating role, and then winding is performed so that an electrode assembly can be obtained; the electrode assembly is put into an outer package shell, and after drying, the electrolyte solution is injected thereto; and the lithium-ion battery is obtained through processes such as vacuum encapsulation, standing, formation, and shaping.

Comparative example 1

A lithium-ion battery is prepared by a method similar to that of Example 1. The difference from Example 1 is that the separator in Comparative Example 1 is a polyethylene film (PE) of 7 μm.

Comparative Example 2 and Comparative Example 3

A lithium-ion battery is prepared by a method similar to that of Example 1. The difference from Example 1 is that the material of the polymer group of the separator in Comparative Examples 2 and 3 is changed.

Examples 1-2 to Examples 1-6

A lithium-ion battery is prepared by a method similar to that of Example 1. The difference from Example 1 is that the coating weight of the polymer group in the polymer layer of the separator in Examples 1-2 to 1-6 is adjusted.

Example 2-1 to Example 2-3

A lithium-ion battery is prepared by a method similar to that of Example 1. The difference from Example 1 is that the type of the polymer group in the polymer layer of the separator in Examples 2-1 to 2-3 is adjusted.

Example 3-1

A lithium-ion battery is prepared by a method similar to that of Example 1. The difference from Example 1 is that Example 3-1 adjusts the setting position of the polymer layer of the separator. Specifically, the steps of preparing the separator include the following.

A polyethylene film (PE) of 7 μm is used as a separator substrate.

Silicon oxide compound particles and a binder aqueous solution type polyacrylic acid are evenly mixed in an appropriate amount of solvent deionized water at a mass ratio of 20:80 to obtain a coating slurry.

The prepared coating slurry is applied on two surfaces of the PE substrate using a coater to form a heat-resistant coating.

The polymer group and the binder are dispersed in a dimethyl carbonate (DMC) solvent to form a mixed system, and the mixed system is atomized and sprayed on the surface of the heat-resistant coating to form a polymer layer, thereby obtaining the separation.

Example 3-2 to Example 3-5

A lithium-ion battery is prepared by a method similar to that of Example 1. The difference from Example 1 is that Example 3-3-2 to Example 3-5 adjust the preparation method of the separator. Specifically, the steps of preparing the separator include the following.

A polyethylene film (PE) of 7 μm is used as a separator substrate.

A polymer group, silicon oxide compound particles and a binder aqueous solution type polyacrylic acid are evenly mixed in an appropriate amount of solvent deionized water at a mass ratio of 80:20 to obtain a coating slurry.

The prepared coating slurry is applied on two surfaces of the PE substrate using a coater to form a heat-resistant coating.

The polymer group and the binder are dispersed in a dimethyl carbonate (DMC) solvent to form a mixed system, and the mixed system is atomized and sprayed on the surface of the heat-resistant coating to form a polymer layer, thereby obtaining the separation.

In Example 3-2, the mass ratio of the polymer group to the silicon oxide compound particles is 1.5:1.

In Example 3-3, the mass ratio of the polymer group to the silicon oxide compound particles is 0.5:1.

In Example 3-4, the mass ratio of the polymer group to the silicon oxide compound particles is 2:1.

In Example 3-5, the mass ratio of the polymer group to the silicon oxide compound particles is 0.2:1.

In Example 3-5, the mass ratio of the polymer group to the silicon oxide compound particles is 0.5:1.

Data of the examples and the comparative examples are as shown in Table 1.

## Tested parts

1. Performance of a lithium-ion battery (a cycle test under a large clamping force)

Before the battery cycle, a pre-tensioning force of 10,000 N is applied to a cell, the lithium-ion battery is charged at 1C constant current under 25°C to 4.25 V, then charged at 4.25 V constant voltage to a current of 1C, and then discharged at 1C constant current to 2.8V, and this is a charge and discharge cycle. Taking a capacity of a first discharge as 100%, a capacity retention rate after 1000 cycles of the battery is calculated. The capacity retention rate (%) of the lithium-ion battery after 1000 cycles = (discharge capacity of the 1000-th cycle/capacity of the first discharge)×100%.

2. Tests of separator parameters

Test of separator mass M: a cutting machine is used to cut 10 separators with an area of 1540.25 $mm^2$, the separators are placed on an electronic balance and weighed. A weight of the separator at this time is recorded as M.

Test of $m_1$: 10 separators with an area of 1540.25 $mm^2$ are placed in an electrolyte solution of EC, EMC and DMC with a volume ratio of 1:1:1 containing 10 mL of 1M $LiPF_6$, for 2 h, taken out and suspended for 2 min, and weighed on an electronic balance, and a weight is recorded as $m_1$.

The liquid retention rate is calculated as $(m_1\text{-}M)/M\times100\%$.

Test of $m_2$: the separator soaked in the electrolyte solution is placed in a pressure apparatus, and pressurized to 10,000N, a pressure is maintained for 5 min, the electronic balance is taken out for weighing, and a weight is record as $m_2$.

The liquid retention rate after pressurization is calculated as: $(m_2\text{-}M)/M\times100\%$.

The liquid retention capability is: A= (m2-M) /(m1-M)×100%.

**Test results**

The test results are as shown in Table 1 and Table 2.

Table 1

| Item | Liquid-retaining polymer | | | | | | | | |
|---|---|---|---|---|---|---|---|---|---|
| | Monomer 1 | Monomer 2 | Monomer 3 | Crystallinity Xc% | Melting temperature Tm(°C) | Glass transition temperature Tg(°C) | Molecular weight (g/mol) | K | Precipitation value m/q |
| Comparative example 1 | None | None | None | None | None | None | None | None | None |
| Comparative example 2 | 95% VDF | 5% TFE | / | 48 | 167 | 56 | 1.3 million | / | 1.2 |
| Comparative example 3 | 100% ethylene oxide | / | / | / | / | -67 | 400,000 | 0.9 | 1.5 |
| Example 1 | 75% VDF | 22% HFP | 3% ethylene | 10 | 110 | -69 | 700,000 | / | 32 |
| Example 1-2 | 75% VDF | 22% HFP | 3% ethylene | 10 | 110 | -69 | 700,000 | / | 32 |
| Example 1-3 | 75% VDF | 22% HFP | 3% ethylene | 10 | 110 | -69 | 700,000 | / | 32 |
| Example 1-4 | 75% VDF | 22% HFP | 3% ethylene | 10 | 110 | -69 | 700,000 | / | 32 |
| Example 1-5 | 75% VDF | 22% HFP | 3% ethylene | 10 | 110 | -69 | 700,000 | / | 32 |
| Example 1-6 | 75% VDF | 22% HFP | 3% ethylene | 10 | 110 | -69 | 700,000 | / | 32 |
| Example 2-1 | 100% cyclohexanolactone | / | / | / | / | -50 | 400,000 | 1.8 | 15 |
| Example 2-2 | 88% ethyl vinyl ether | 12% vinyl acetate | / | / | / | 0 | 300,000 | 1.6 | 15 |
| Example 2-3 | 80% butyraldehyde | 20% polyvinyl alcohol | / | / | / | 55 | 180,000 | 1.1 | 7 |
| Example 3-1 | 75% VDF | 22% HFP | 3% ethylene | 10 | 110 | -69 | 700,000 | / | 32 |
| Example 3-2 | 75% VDF | 22% HFP | 3% ethylene | 10 | 110 | -69 | 700,000 | / | 32 |

(continued)

| Item | Liquid-retaining polymer | | | | | | | | |
|---|---|---|---|---|---|---|---|---|---|
| | Monomer 1 | Monomer 2 | Monomer 3 | Crystallinity Xc% | Melting temperature Tm(°C) | Glass transition temperature Tg(°C) | Molecular weight (g/mol) | K | Precipitation value m/q |
| Example 3-3 | 75% VDF | 22% HFP | 3% ethylene | 10 | 110 | -69 | 700,000 | / | 32 |
| Example 3-4 | 75% VDF | 22% HFP | 3% ethylene | 10 | 110 | -69 | 700,000 | / | 32 |
| Example 3-5 | 75% VDF | 22% HFP | 3% ethylene | 10 | 110 | -69 | 700,000 | / | 32 |
| Example 3-6 | 75% VDF | 22% HFP | 3% ethylene | 10 | 110 | -69 | 700,000 | / | 32 |

In Table 1, 75% VDF means that the molar percentage of vinylidene fluoride (VDF) is 75% based on the total molar amount of vinylidene fluoride (VDF), hexafluoropropylene (HFP) and ethylene.

Table 2

| Item | Separator | | | | | | | | Lithium-ion battery |
|---|---|---|---|---|---|---|---|---|---|
| | Coating weight of liquid-absorbing polymer (mg/1540.25 $mm^2$) | $\Lambda$*v/$\lambda$ | Liquid absorption rate v(mg/s) | v/$\lambda$ | Liquid retention capability $\Lambda$ | Liquid retention rate (before pressurization) | Liquid retention rate (after pressurization) | Porosity % | Capacity retention rate after 1000 cycles under a large clamping force of 10,000 N |
| Comparative example 1 | None | 0.16 | 1.1 | 3.2 | 5% | 65% | 3.3% | 35% | 65.3% |
| Comparative example 2 | 1.5 | 1.30 | 5.3 | 11.8 | 11% | 85% | 9.4% | 45% | 73.7% |
| Comparative example 3 | 1.5 | 0.85 | 1.8 | 4.1 | 46% | 132% | 60.8% | 45% | 69.5% |
| Example 1 | 1.5 | 5.00 | 4.4 | 9.8 | 51% | 116% | 59.2% | 45% | 84.6% |
| Example 1-2 | 1.0 | 3.00 | 3.6 | 7.9 | 38% | 95% | 36.1% | 45% | 80.3% |
| Example 1-3 | 2.0 | 6.00 | 5.2 | 11.5 | 52% | 128% | 66.6% | 45% | 86.0% |
| Example 1-4 | 0.5 | 1.50 | 2.3 | 5.0 | 30% | 88% | 26.4% | 45% | 77.9% |
| Example 1-5 | 3.0 | 10.00 | 7.8 | 17.2 | 58% | 142% | 82.4% | 45% | 80.4% |
| Example 1-6 | 3.5 | 12.00 | 8.1 | 17.9 | 67% | 153% | 102.5% | 45% | 75.5% |
| Example 2-1 | 1.5 | 5.70 | 4.8 | 10.8 | 53% | 121% | 64.1% | 45% | 85.0% |
| Example 2-2 | 1.5 | 6.20 | 5.0 | 11.1 | 56% | 126% | 70.6% | 45% | 86.6% |
| Example 2-3 | 1.5 | 4.80 | 4.2 | 9.4 | 51% | 119% | 60.7% | 45% | 82.3% |
| Example 3-1 | 1.5 | 5.151 | 4.6 | 10.1 | 51% | 116% | 59.2% | 46% | 90.7% |
| Example 3-2 | 1.5 | 4.30 | 4.5 | 10.0 | 43% | 103% | 44.3% | 45% | 81.4% |
| Example 3-3 | 1.5 | 3.00 | 4.2 | 9.4 | 32% | 95% | 30.4% | 45% | 81.0% |
| Example 3-4 | 1.5 | 4.60 | 4.3 | 9.6 | 48% | 109% | 52.3% | 45% | 82.6% |
| Example 3-5 | 1.5 | 1.21 | 2.2 | 4.8 | 25% | 90% | 22.5% | 45% | 75.0% |
| Example 3-6 | 1.5 | 3.00 | 4.2 | 9.4 | 32% | 125% | 40.0% | 45% | 81.9% |

In Table 2, the liquid retention capability $\Lambda=\left[\frac{m_2-M}{m_1-M}\right]$.

The liquid retention rate (before pressurization) is $(m_1\text{-}M)/M\times100\%$.

The liquid retention rate (after pressurization) is $(m_2\text{-}M)/M\times100\%$.

Compared with Comparative Example 1, the cycle performance of the lithium-ion battery is improved by adding the polymer of the present application to the separator in the example of the present application.

Although polymers are added to the separators in Comparative Examples 2 and 3, the polymers have poor liquid retention and liquid absorption capabilities and cannot effectively improve the cycle performance of the lithium-ion battery.

Compared with Comparative Example 1, a polymer layer is disposed on the surface of the separator in the example of the present application. The introduction of the polymer can increase the liquid absorption rate and liquid retention capability of the separator, and can further improve the cycle performance of the battery cell.

While the present application has been described with reference to the preferred examples, various modifications may be made and components thereof may be replaced with equivalents without departing from the scope of the present application. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A separator, comprising a polymer group, wherein the polymer group comprises at least one of a first polymer and a second polymer,
wherein the separator satisfies:

$$1.5 \leq \left[\frac{m_2-M}{m_1-M}\right] \times \frac{v}{\lambda} \leq 12;$$

M represents mass of the separator that does not absorb an electrolyte solution, and a unit thereof is g;
$m_1$ represents mass of the separator weighed under an ambient pressure after same is soaked in the electrolyte solution for 2 h, and a unit thereof is g;
represents mass of the separator weighed under a pressure of 10,000 N in the ambient pressure after same is soaked in the electrolyte solution for 2 h, and a unit thereof is g;
v represents a liquid absorption rate of the separator, and a unit thereof is mg/s; and
λ represents porosity of the separator.

2. The separator according to claim 1, wherein the separator satisfies:

$$3.0 \leq \left[\frac{m_2-M}{m_1-M}\right] \times \frac{v}{\lambda} \leq 6.0.$$

3. The separator according to claim 1 or 2, wherein the separator satisfies:
$\frac{m_2-M}{m_1-M} > 25\%$ ; and optionally, $\frac{m_2-M}{m_1-M} \geq 30\%$ ·

4. The separator according to any one of claims 1 to 3, wherein the separator satisfies:

$$88\% \leq \frac{m_1-M}{M} \times 100\% \leq 300\%.$$

5. The separator according to any one of claims 1 to 4, wherein the separator satisfies:

$$22.5\% \leq \frac{m_2-M}{M} \times 100\% \leq 300\%.$$

6. The separator according to any one of claims 1 to 5, wherein the separator satisfies:
v/λ > 5.00; and optionally, 5<v/λ<50.

**7.** The separator according to any one of claims 1 to 6, wherein the polymer group has a mass percentage of 0.1% to 20% based on total mass of the separator.

**8.** The separator according to any one of claims 1 to 7, wherein the first polymer and the second polymer each independently include a fluoropolymer;

optionally, crystallinity of the fluoropolymer measured by differential scanning calorimetry is $Xc_1$, $0<Xc_1\leq30\%$; a melting temperature of the fluoropolymer is $T_{m1}$, a unit thereof is °C, and $0<T_{m1}\leq140$;
further optionally, a glass transition temperature of the fluoropolymer is $Tg_1$, a unit thereof is °C, and $-150\leq T_{g1}\leq60$;
further optionally, the fluoropolymer comprises at least one of a building block represented by formula (AI) to a building block represented by formula (AIII),

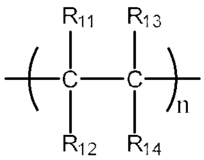 formula (AI) and 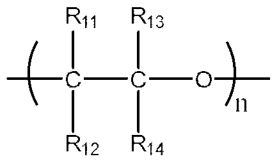 formula (AII),

in formula (AI) and formula (AII), $R_{11}$, $R_{12}$, $R_{13}$ and $R_{14}$ each independently comprise a hydrogen atom, a fluorine atom, a chlorine atom, a bromine atom, a substituted or unsubstituted C1-C3 alkyl group or a substituted or unsubstituted C1-C3 alkoxy group, and at least one of $R_{11}$, $R_{12}$, $R_{13}$ and $R_{14}$ comprises a fluorine atom;

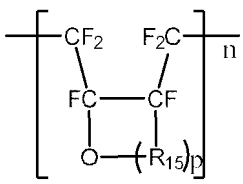 formula (AIII);

in formula (AIII), $R_{15}$ comprises a single bond, a substituted or unsubstituted C1-C3 alkyl group; p is selected from positive integers from 1 to 3; and n is selected from positive integers from 1,000 to 30,000.

**9.** The battery cell according to any one of claims 1 to 8, wherein the first polymer and the second polymer each independently comprise an ether polymer,

optionally, the ester polymer is made into a sheet structural body; the sheet structural body is subjected to a dynamic frequency scanning test at $(T_{m2}+20)$°C to obtain an elasticity modulus G'-loss modulus G" curve, a slope of the elasticity modulus G'-loss modulus G" curve is $K_1$, $1<K_1<\infty$, and $T_{m2}$°C represents a melting temperature of the ester polymer;
further optionally, the ester polymer comprises at least one of a building block represented by formula (BI) and a building block represented by formula (BII),

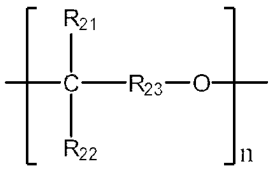 formula (BI);

in formula (BI), $R_{21}$ and $R_{22}$ each independently comprise a hydrogen atom, a substituted or unsubstituted C1-C3 alkyl group, or a substituted or unsubstituted C1-C3 alkoxy group; $R_{23}$ comprises a substituted or unsubstituted C1-C5 alkylene group;

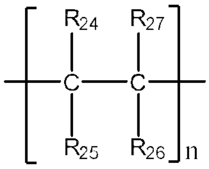
formula (BII);

and

in formula (BII), $R_{24}$ to $R_{27}$ each independently comprise a hydrogen atom, a substituted or unsubstituted C1-C3 alkyl group, a substituted or unsubstituted C1-C3 alkoxy group or an ether group, and at least one of $R_{24}$ to $R_{27}$ comprises a substituted or unsubstituted C1-C3 alkoxy group or an ether group.

**10.** The battery cell according to any one of claims 1 to 9, wherein the first polymer and the second polymer each independently comprise an ester polymer;

optionally, the ester polymer is made into a sheet structural body; the sheet structural body is subjected to a dynamic frequency scanning test at $(T_{m3}+20)$°C to obtain an elasticity modulus G'-loss modulus G" curve, a slope of the elasticity modulus G'-loss modulus G" curve is $K_2$, $1<K_2<\infty$, $T_{m3}$°C represents a melting temperature of the ester polymer; optionally, $1<K_2\leq100$; and further optionally, $1<K_2\leq10$;

further optionally, the ester polymer comprises at least one of a building block represented by formula (CI) and a building block represented by formula (CII),

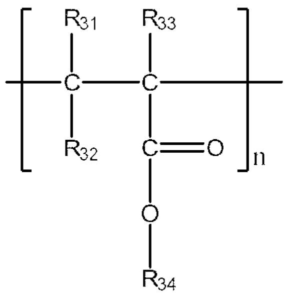
formula (CI);

in formula (CI), $R_{31}$, $R_{32}$ and $R_{33}$ each independently comprise a hydrogen atom, a substituted or unsubstituted C1-C8 alkyl group; and $R_{34}$ comprises a substituted or unsubstituted C1-C8 alkyl group, or a substituted or unsubstituted C1-C8 hydroxyalkyl group;

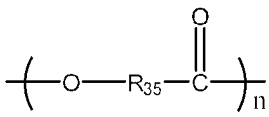
formula (CII);

in formula (CII), $R_{35}$ comprises a substituted or unsubstituted C2-C6 methylene group; and optionally, $R_{35}$ each independently comprises a substituted or unsubstituted C2-C4 methylene group.

**11.** The battery cell according to any one of claims 1 to 10, wherein the first polymer and the second polymer each independently comprise an aldehyde-ketone polymer,

optionally, the aldehyde-ketone polymer is made into a sheet structural body; the sheet structural body is subjected to a dynamic frequency scanning test at $(T_{m4}+20)$°C to obtain an elasticity modulus G'-loss modulus G" curve, a slope of the elasticity modulus G'-loss modulus G" curve is $K_3$, $0.8\leq K_3<\infty$, $T_{m4}$°C represents a melting temperature of the aldehyde-ketone polymer; optionally, $0.8\leq K_3\leq100$; and further optionally, $0.8\leq K_3\leq10$;

further optionally, the aldehyde-ketone polymer comprises at least one of a building block represented by formula (DI) and a building block represented by formula (DII),

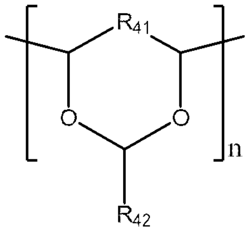

formula (DI);

in formula (DI), $R_{41}$ comprises a single bond, and a substituted or unsubstituted C1-C6 methylene group; $R_{42}$ comprises a hydrogen atom, and a substituted or unsubstituted C1-C6 alkyl group;

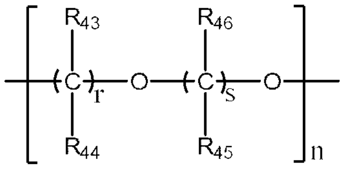

formula (DII);

in formula (DII), $R_{43}$ to $R_{46}$ each independently comprise a hydrogen atom, a hydroxyl group, a substituted or unsubstituted C1-C3 alkyl group, a substituted or unsubstituted C1-C3 hydroxyalkyl group, or a substituted or unsubstituted C1-C3 alkoxy group; and r and s are each independently selected from integers in a range of 0 to 5, and at least one of r and s is selected from a positive integer.

**12.** The separator according to any one of claims 1 to 11, wherein the separator comprises a porous substrate, and a polymer layer disposed on at least one surface of the porous substrate, and the polymer layer comprises the polymer group.

**13.** The separator according to any one of claims 1 to 12, wherein a coating weight of the polymer group is 0.5 mg/1540.25 $mm^2$ to 5 mg/1540.25 $mm^2$.

**14.** A battery cell, comprising the separator according to any one of claims 1 to 13.

**15.** A battery, comprising the battery cell according to claim 14.

**16.** An electrical apparatus, comprising the battery according to claim 15.

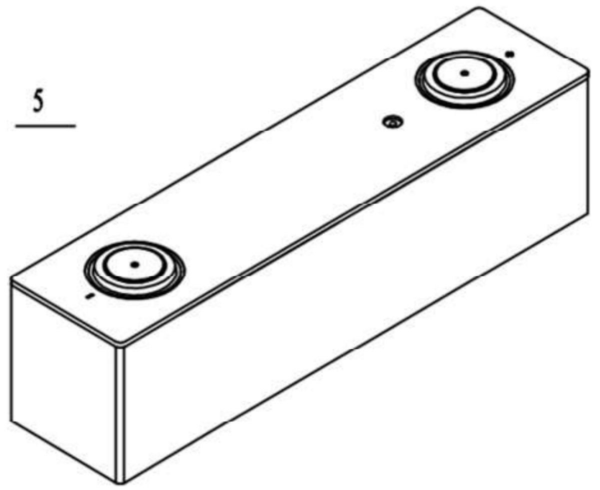


FIG. 1

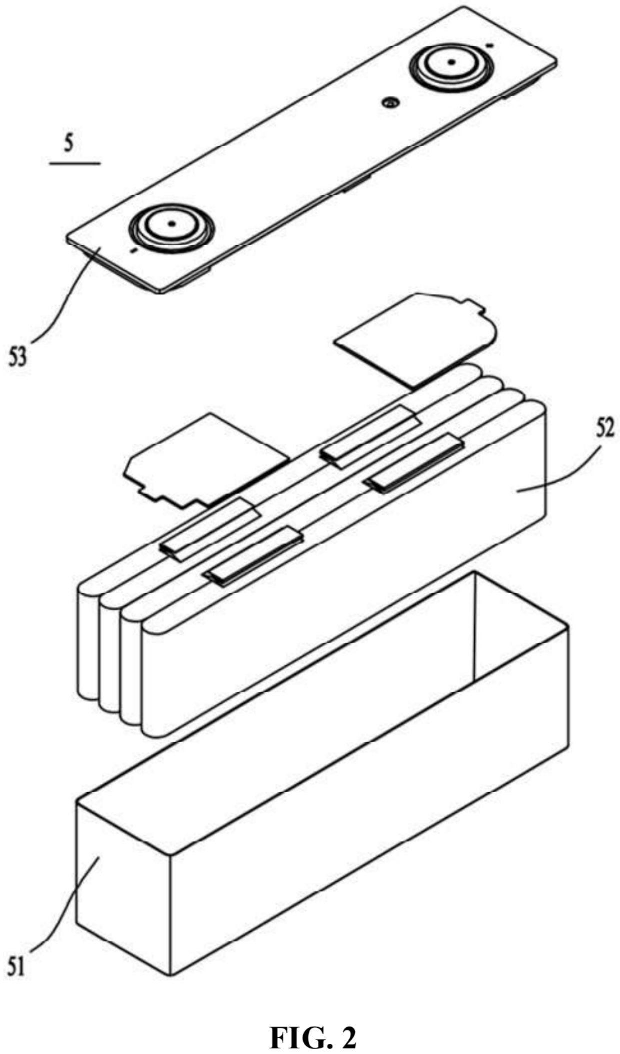


FIG. 2

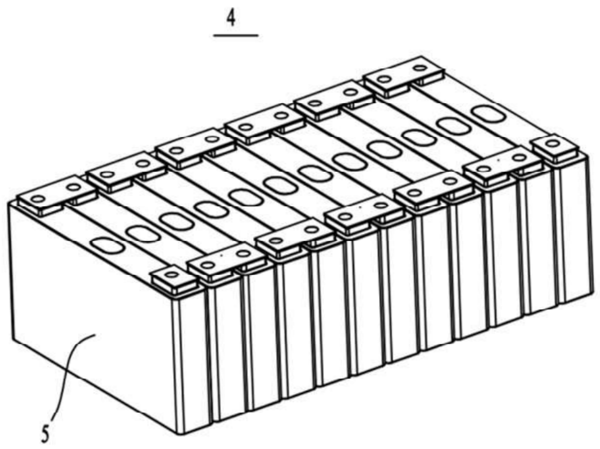


FIG. 3

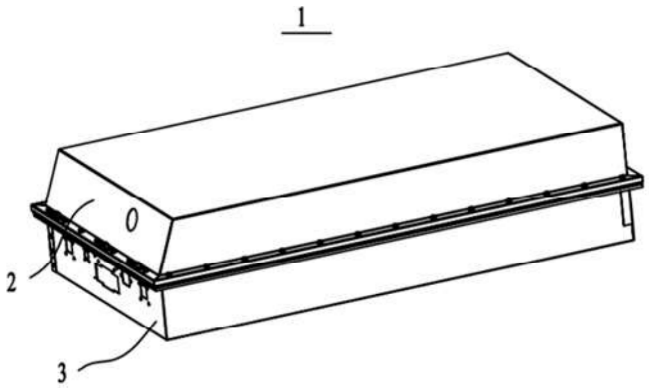


FIG. 4

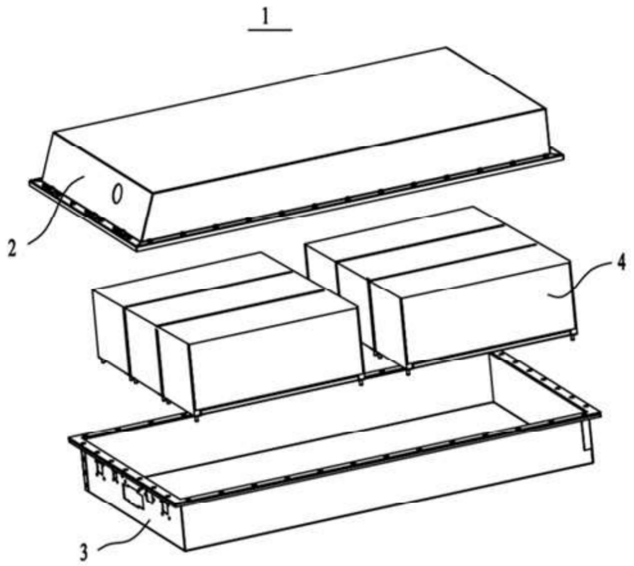


FIG. 5

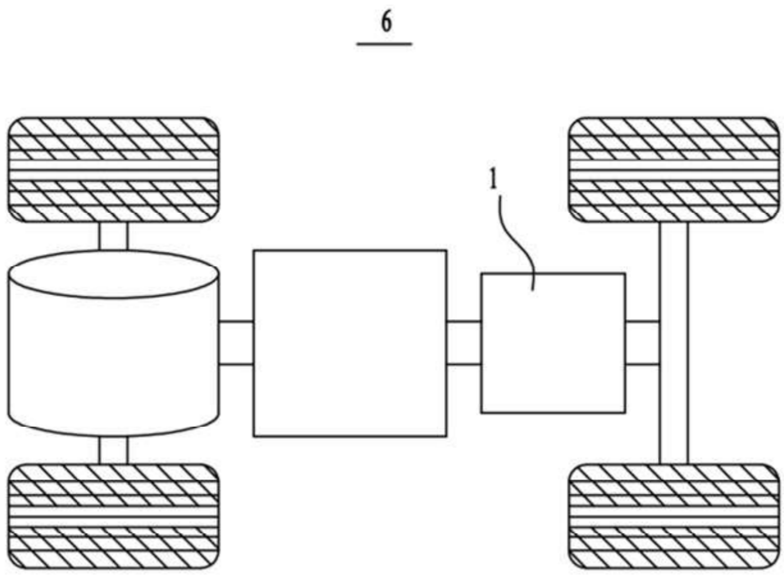


FIG. 6

**INTERNATIONAL SEARCH REPORT**

International application No.
**PCT/CN2023/088802**

**A. CLASSIFICATION OF SUBJECT MATTER**

H01M50/489(2021.01)i; H01M50/411(2021.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; DWPI; VEN; ENTXT; CNKI: 隔离膜, 聚合物, 己内酯, 乙烯, 浸渍, 电解液, 重量, 速度, 孔隙率, separator, polymer, caprolactone, ethylene, immerse, electrolyte, weight, speed, porosity

**C. DOCUMENTS CONSIDERED TO BE RELEVANT**

| Category* | Citation of document, with indication, where appropriate, of the relevant passages | Relevant to claim No. |
|---|---|---|
| X | EP 3413377 A1 (LITHIUM ENERGY & POWER GMBH & CO., KG) 12 December 2018 (2018-12-12)<br>description, paragraphs 13-35 | 1-7, 10, 12-16 |
| X | CN 113964453 A (ENVISION POWER TECHNOLOGY (JIANGSU) CO., LTD. et al.) 21 January 2022 (2022-01-21)<br>description, paragraphs 40-62 | 1-7, 10, 12-16 |
| Y | CN 109873107 A (TAISHUN YONGQING ELECTRIC POWER TECHNOLOGY CO., LTD.) 11 June 2019 (2019-06-11)<br>description, paragraphs [0004]-[0064] | 1-16 |
| Y | CN 114243217 A (CYG CHINALY NEW MATERIAL CO., LTD.) 25 March 2022 (2022-03-25)<br>description, paragraphs 4-79 | 1-16 |
| Y | US 2010248002 A1 (TAKITA, Kotaro et al.) 30 September 2010 (2010-09-30)<br>description, paragraphs 35-170 | 1-16 |
| A | CN 105118946 A (CENTRAL SOUTH UNIVERSITY) 02 December 2015 (2015-12-02)<br>entire document | 1-16 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 December 2023** | **29 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2023/088802**

**C. DOCUMENTS CONSIDERED TO BE RELEVANT**

| Category* | Citation of document, with indication, where appropriate, of the relevant passages | Relevant to claim No. |
| --- | --- | --- |
| A | CN 115566361 A (NINGDE CONTEMPORARY AMPEREX TECHNOLOGY CO., LTD.) 03 January 2023 (2023-01-03)<br>entire document | 1-16 |

Form PCT/ISA/210 (second sheet) (July 2022)

**INTERNATIONAL SEARCH REPORT**
**Information on patent family members**

International application No.
**PCT/CN2023/088802**

| Patent document cited in search report | | | Publication date (day/month/year) | Patent family member(s) | | | Publication date (day/month/year) |
|---|---|---|---|---|---|---|---|
| EP | 3413377 | A1 | 12 December 2018 | None | | | |
| CN | 113964453 | A | 21 January 2022 | None | | | |
| CN | 109873107 | A | 11 June 2019 | CN | 109873107 | B | 20 September 2022 |
| CN | 114243217 | A | 25 March 2022 | CN | 114243217 | B | 13 May 2022 |
| | | | | WO | 2023159790 | A1 | 31 August 2023 |
| US | 2010248002 | A1 | 30 September 2010 | WO | 2009084720 | A1 | 09 July 2009 |
| CN | 105118946 | A | 02 December 2015 | CN | 105118946 | B | 20 March 2018 |
| CN | 115566361 | A | 03 January 2023 | WO | 2023273652 | A1 | 05 January 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB T2165022008 A
- GB T60402002 A
- GB T190772016ISO A